(19) Europäisches Patentamt / European Patent Office / Office européen des brevets

(11) **EP 4 576 634 A1**

(12) **EUROPEAN PATENT APPLICATION**
published in accordance with Art. 153(4) EPC

(43) Date of publication:
**25.06.2025 Bulletin 2025/26**

(21) Application number: **23867365.1**

(22) Date of filing: **13.09.2023**

(51) International Patent Classification (IPC):
**H04L 5/00** (2006.01)

(52) Cooperative Patent Classification (CPC):
**H04L 1/00; H04L 5/00; H04W 72/25**

(86) International application number:
**PCT/CN2023/118529**

(87) International publication number:
**WO 2024/061076 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 23.09.2022 CN 202211165768
09.11.2022 CN 202211399112

(71) Applicant: **Huawei Technologies Co., Ltd.**
**Shenzhen, Guangdong 518129 (CN)**

(72) Inventors:
• **WANG, Bichai**
**Shenzhen, Guangdong 518129 (CN)**
• **HE, Hongli**
**Shenzhen, Guangdong 518129 (CN)**
• **LI, Xueru**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **SIDELINK COMMUNICATION METHOD AND APPARATUS**

(57) This application provides a sidelink communication method and a communication apparatus, which are applicable to a sidelink communication scenario. The method includes: A first terminal device receives data sent by a second terminal device, and sends feedback information to the second terminal device through a PSSCH based on a receiving status of the data. Compared with sending the feedback information through a PSFCH, this can avoid a latency caused because the feedback information cannot be sent in a timely manner when a period of a PSFCH resource is long. In addition, the PSSCH includes second-order SCI and newly defined SCI, and the feedback information may be carried in the newly defined SCI. In this way, the feedback information can be carried by defining the new SCI, and existing SCI (for example, first-order SCI and the second-order SCI) is modified slightly. The PSSCH includes the second-order SCI and data, and the feedback information may be carried in the second-order SCI or the second data. In this way, the existing SCI or data can be reused to transmit the feedback information. The solution is simple and easy to implement.

400

FIG. 4

## Description

This application claims priorities to Chinese Patent Application No. 202211165768.5, filed with the China National Intellectual Property Administration on September 23, 2022 and entitled "SIDELINK COMMUNICATION METHOD AND COMMUNICATION DEVICE", and to Chinese Patent Application No. 202211399112.X, filed with the China National Intellectual Property Administration on November 9, 2022 and entitled "SIDELINK COMMUNICATION METHOD AND APPARATUS", both of which are incorporated herein by reference in their entireties.

## TECHNICAL FIELD

This application relates to the sidelink communication field, and more specifically, to a sidelink communication method and an apparatus.

## BACKGROUND

In sidelink (sidelink, SL) communication, reliability may be improved by using a hybrid automatic repeat request (hybrid automatic repeat request, HARQ) mechanism. In the HARQ mechanism, after a transmitter sends data to a receiver, the receiver may send a HARQ feedback to the transmitter, to indicate whether the data is correctly received. For example, if the receiver correctly receives the data, the receiver sends an acknowledgment (acknowledgment, ACK) to the transmitter, and the transmitter considers, based on the ACK, that the data is correctly received and does not need to be retransmitted. If the receiver does not correctly receive the data, the receiver sends a negative acknowledgment (negative acknowledgment, NACK) to the transmitter, and the transmitter considers, based on the NACK, that the data is not correctly received and needs to be retransmitted.

In the conventional technology, the receiver sends the HARQ feedback through a physical sidelink feedback channel (physical sidelink feedback channel, PSFCH). A PSFCH resource is a periodic resource preconfigured in a resource pool. If each slot is configured with a PSFCH resource, system overheads are excessively high. If not all slots are configured with a PSFCH resource, the receiver needs to wait for a slot with a PSFCH resource to perform feedback, and an ultra-low latency requirement of a service like the industrial internet may not be satisfied.

## SUMMARY

This application provides a sidelink communication method and an apparatus, to reduce a latency in sending feedback information by a terminal device.

According to a first aspect, a sidelink communication method is provided. The method may be performed by a terminal device, or may be performed by a chip or a circuit used in a terminal device. This is not limited in this application. The following uses a first terminal device as an example for description.

The method may include: The first terminal device receives first data; and the first terminal device sends first feedback information through a first physical sidelink shared channel PSSCH, where the first feedback information indicates a receiving status of the first data. The first PSSCH includes first sidelink control information SCI and second SCI, and the second SCI includes the first feedback information; or the first PSSCH includes first SCI and second data, and the first SCI or the second data includes the first feedback information.

For example, the first SCI is second-order SCI, and the second SCI is newly defined SCI (for example, referred to as third-order SCI).

For example, the second data and the first feedback information may be sent by the first terminal device to a same terminal device, or may be sent by the first terminal device to different terminal devices.

Based on the foregoing technical solution, after receiving the first data, the first terminal device may send feedback information (namely, the first feedback information) for the first data through a PSSCH. Compared with sending the feedback information through a PSFCH, this can avoid a latency caused because receiving information of data cannot be fed back in a timely manner when a period of a PSFCH resource is long. In addition, if the PSSCH includes the first SCI and the second SCI, the feedback information may be carried in the second SCI. In this way, the feedback information can be carried by defining new SCI, and existing SCI (for example, the first-order SCI and the second-order SCI) is modified slightly, or even does not need to be modified. Therefore, an existing protocol is modified slightly. If the PSSCH includes the first SCI and data (for example, the second data), the feedback information may be carried in the first SCI or the second data. In this way, new SCI may not need to be defined, and existing SCI or data is reused to transmit the feedback information. The solution is simple and easy to implement.

With reference to the first aspect, in some implementations of the first aspect, when the first PSSCH includes the first SCI and the second SCI, the first PSSCH further includes the second data.

Based on the foregoing technical solution, if the PSSCH includes the first SCI, the second SCI, and the second data, the first feedback information and the second data may be sent to different terminal devices. A terminal device that needs to receive only the first feedback information may not decode the first SCI and/or the second data, and a terminal device that needs to receive only the second data may not decode the second SCI, thereby reducing decoding complexity and power consumption.

With reference to the first aspect, in some implementations of the first aspect, the second data and the first feedback information are in a same time unit.

Based on the foregoing technical solution, a time unit in which the first terminal device sends the first feedback information to a second terminal device through a PSSCH may be a time unit in which the first terminal device sends the second data. In this way, a half-duplex problem caused when the first terminal device needs to simultaneously send feedback information and receive feedback information in a same time unit can be avoided. For example, a time unit in which the first terminal device receives feedback information for the second data is after the time unit in which the first terminal device sends the first feedback information in time domain. This can avoid a half-duplex problem caused when the first terminal device needs to simultaneously send the first feedback information and receive the feedback information for the second data in a same time unit.

With reference to the first aspect, in some implementations of the first aspect, the method further includes: The first terminal device receives first indication information, where the first indication information indicates to send the first feedback information through a PSSCH. That the first terminal device sends first feedback information through a first PSSCH includes: The first terminal device sends the first feedback information based on the first indication information through the first PSSCH.

Based on the foregoing technical solution, the first terminal device may send feedback information to another terminal device through a PSSCH based on an indication of the another terminal device, to avoid poor experience caused when the first terminal device sends the feedback information on a PSFCH. In addition, if the another terminal device sends the first indication information, and the first indication information indicates the first terminal device to send the feedback information to the another terminal device through the PSSCH, the another terminal device may blindly detect a PSCCH, and decode, based on the detected PSCCH, the PSSCH associated with the PSCCH, to obtain the feedback information. Otherwise, a PSCCH may not need to be blindly detected, to avoid excessively high blind detection power consumption.

With reference to the first aspect, in some implementations of the first aspect, the method further includes: The first terminal device sends second indication information, where the second indication information is used to decode the first feedback information.

Based on the foregoing technical solution, the first terminal device may provide, for another terminal device, information used to decode feedback information. In this way, the another terminal device may decode the feedback information based on the information.

With reference to the first aspect, in some implementations of the first aspect, the second indication information includes at least one of the following information: a format of the first feedback information, a channel coding rate of the first feedback information, a modulation scheme of the first feedback information, a quantity of bits included in the first feedback information, and a resource occupied by the first feedback information on the first PSSCH.

With reference to the first aspect, in some implementations of the first aspect, the method further includes: The first terminal device sends third indication information, where the third indication information indicates that the first PSSCH includes the first feedback information.

Based on the foregoing technical solution, if the first terminal device needs to send feedback information to another terminal device on a PSSCH, the first terminal device may indicate, for example, a format of the PSSCH, to the another terminal device. In this way, the another terminal device may blindly detect a PSCCH, and decode, based on the detected PSCCH, the PSSCH associated with the PSCCH, to obtain the feedback information. Specifically, the another terminal device may determine, based on the detected PSCCH, the format of the PSSCH associated with the PSCCH, and then determine whether the PSSCH includes the feedback information.

With reference to the first aspect, in some implementations of the first aspect, the method further includes: The first terminal device sends at least one of the following: a source identifier of the first feedback information, a destination identifier of the first feedback information, and a device identifier of the first terminal device.

With reference to the first aspect, in some implementations of the first aspect, the method further includes: The first terminal device sends fourth indication information, where the fourth indication information indicates a quantity of transport blocks corresponding to the first feedback information, the first feedback information includes a HARQ process number and/or a bitmap corresponding to each transport block, and the bitmap indicates feedback information corresponding to the transport block or feedback information corresponding to at least one code block group in the transport block.

Based on the foregoing technical solution, feedback information corresponding to each transport block or each code block group in a transport block may be indicated by using a bitmap.

With reference to the first aspect, in some implementations of the first aspect, the quantity of transport blocks corresponding to the first feedback information is K, and a quantity of bits occupied by the fourth indication information is

$\log_2 M$, where M is a maximum quantity of transport blocks corresponding to feedback information of the first terminal device, K and M are integers greater than 1 or equal to 1, and K is less than M or equal to M.

With reference to the first aspect, in some implementations of the first aspect, M and/or a quantity of bits of the bitmap are/is preconfigured in a resource pool; or M and/or a quantity of bits of the bitmap are/is determined by the first terminal device; or M and/or a quantity of bits of the bitmap are/is configured by a network device; or M and/or a quantity of bits of the bitmap are/is determined by another terminal device.

With reference to the first aspect, in some implementations of the first aspect, there is a mapping relationship between a resource position of the first feedback information and a resource position of the first data.

Based on the foregoing technical solution, there is a mapping relationship between a resource position of feedback information and a resource position of data. In other words, the feedback information is used to feed back a receiving status of the data at the resource position having the mapping relationship. In this way, a terminal device receiving the feedback information may determine the feedback information based on the mapping relationship. In addition, the feedback information may not carry information related to an identifier or an address, thereby reducing signaling overheads.

With reference to the first aspect, in some implementations of the first aspect, the first feedback information includes a bitmap of Y*N bits, the bitmap of Y*N bits indicates feedback information of Y terminal devices, and feedback information of each terminal device includes a bitmap of N bits, where Y and N are integers greater than 1 or equal to 1.

Based on the foregoing technical solution, feedback information corresponding to each terminal device may be indicated by using a bitmap. There is a correspondence between a bit position in the bitmap and the terminal device. The correspondence may be configured by the first terminal device for Y terminal devices or determined by the first terminal device and Y terminal devices through negotiation. For example, the 1st terminal device in the Y terminal devices corresponds to the 1st to Nth bits in the bitmap of Y*N bits, the 2nd terminal device in the Y terminal devices corresponds to the (N+1)th to (2*N)th bits in the bitmap of Y*N bits, and so on. A terminal device that receives the first feedback information may determine the feedback information based on the correspondence, and the feedback information may not carry information related to an identifier or an address, thereby reducing signaling overheads.

With reference to the first aspect, in some implementations of the first aspect, transmit power at which the first terminal device sends the second data in each frequency domain unit is the same as or different from transmit power at which the first terminal device sends the first feedback information in each frequency domain unit.

With reference to the first aspect, in some implementations of the first aspect, both the transmit power of the second data in each frequency domain unit and the transmit power of the first feedback information in each frequency domain unit are first transmit power, and the first transmit power is any one of the following: highest transmit power in transmit power that is in each frequency domain unit and that is determined based on channel information corresponding to the first feedback information and transmit power that is in each frequency domain unit and that is determined based on channel information corresponding to the second data; or transmit power that is in each frequency domain unit and that is determined based on channel information corresponding to data with a highest priority in the first data and the second data.

With reference to the first aspect, in some implementations of the first aspect, the transmit power of the second data in each frequency domain unit is different from the transmit power of the first feedback information in each frequency domain unit, and the transmit power of the first feedback information in each frequency domain unit is any one of the following: highest transmit power in transmit power that is in all frequency domain units and that is determined based on channel information corresponding to the first feedback information; or transmit power that is in each frequency domain unit and that is determined based on channel information corresponding to data with a highest priority in the first data.

According to a second aspect, a sidelink communication method is provided. The method may be performed by a terminal device, or may be performed by a chip or a circuit used in a terminal device. This is not limited in this application. The following uses a second terminal device as an example for description.

The method may include: The second terminal device sends first data; and the second terminal device receives first feedback information through a first physical sidelink shared channel PSSCH, where the first feedback information indicates a receiving status of the first data. The first PSSCH includes first sidelink control information SCI and second SCI, and the second SCI includes the first feedback information; or the first PSSCH includes first SCI and second data, and the first SCI or the second data includes the first feedback information.

With reference to the second aspect, in some implementations of the second aspect, when the first PSSCH includes the first SCI and the second SCI, the first PSSCH further includes the second data.

With reference to the second aspect, in some implementations of the second aspect, the second data and the first feedback information are in a same time unit.

With reference to the second aspect, in some implementations of the second aspect, the method further includes: The second terminal device sends first indication information, where the first indication information indicates to send the first feedback information through a PSSCH. That the second terminal device receives first feedback information through a first PSSCH includes: The second terminal device receives the first feedback information based on the first indication information through the first PSSCH.

With reference to the second aspect, in some implementations of the second aspect, the method further includes: The second terminal device receives second indication information, where the second indication information is used to decode the first feedback information; and the second terminal device decodes the first feedback information based on the second indication information.

With reference to the second aspect, in some implementations of the second aspect, the second indication information includes at least one of the following information: a format of the first feedback information, a channel coding rate of the first feedback information, a modulation scheme of the first feedback information, a quantity of bits included in the first feedback information, and a resource occupied by the first feedback information on the first PSSCH.

With reference to the second aspect, in some implementations of the second aspect, the method further includes: The second terminal device receives third indication information, where the third indication information indicates that the first PSSCH includes the first feedback information.

For example, the second terminal device may decode the first PSSCH based on the third indication information.

With reference to the second aspect, in some implementations of the second aspect, the method further includes: The second terminal device receives at least one of the following: a source identifier of the first feedback information, a destination identifier of the first feedback information, and a device identifier of a first terminal device.

With reference to the second aspect, in some implementations of the second aspect, the method further includes: The second terminal device receives fourth indication information, where the fourth indication information indicates a quantity of transport blocks corresponding to the first feedback information, the first feedback information includes a HARQ process number and/or a bitmap corresponding to each transport block, and the bitmap indicates feedback information corresponding to the transport block or feedback information corresponding to at least one code block group in the transport block.

For example, the method further includes: The second terminal device decodes the first feedback information based on the fourth indication information.

With reference to the second aspect, in some implementations of the second aspect, the quantity of transport blocks corresponding to the first feedback information is K, and a quantity of bits occupied by the fourth indication information is $\log_2 M$, where M is a maximum quantity of transport blocks corresponding to feedback information of the first terminal device, K and M are integers greater than 1 or equal to 1, and K is less than M or equal to M.

With reference to the second aspect, in some implementations of the second aspect, M and/or a quantity of bits of the bitmap are/is preconfigured in a resource pool; or M and/or a quantity of bits of the bitmap are/is determined by the second terminal device; or M and/or a quantity of bits of the bitmap are/is configured by a network device; or M and/or a quantity of bits of the bitmap are/is determined by another terminal device.

With reference to the second aspect, in some implementations of the second aspect, there is a mapping relationship between a resource position of the first feedback information and a resource position of the first data.

With reference to the second aspect, in some implementations of the second aspect, the first feedback information includes a bitmap of Y*N bits, the bitmap of Y*N bits indicates feedback information of Y terminal devices, and feedback information of each terminal device includes a bitmap of N bits, where Y and N are integers greater than 1 or equal to 1.

For beneficial effects of the second aspect and the possible designs, refer to the related description of the first aspect. Details are not described herein again.

According to a third aspect, a communication apparatus is provided. The apparatus is configured to perform the method in any one of the possible implementations of the first aspect or the second aspect. Specifically, the apparatus may include units and/or modules configured to perform the method in any one of the possible implementations of the first aspect or the second aspect, for example, a processing unit and/or a communication unit.

In an implementation, the apparatus is a terminal device (for example, a first terminal device or a second terminal device). When the apparatus is a terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device (for example, a first terminal device or a second terminal device). When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes at least one processor, configured to execute a computer program or instructions stored in a memory, to perform the method in any one of the possible implementations of the first aspect or the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device (for example, a first terminal device or a second terminal device).

In another implementation, the apparatus is a chip, a chip system, or a circuit used in a terminal device (for example, a first terminal device or a second terminal device).

According to a fifth aspect, this application provides a processor, configured to perform the method provided in the first aspect or the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by a device, and the program code is used to perform the method in any one of the possible implementations of the first aspect or the second aspect.

According to a seventh aspect, a computer program product including instructions is provided. When the computer program product runs on a computer, the computer is enabled to perform the method in any one of the possible implementations of the first aspect or the second aspect.

According to an eighth aspect, a communication system is provided, including the first terminal device and the second terminal device described above.

**BRIEF DESCRIPTION OF DRAWINGS**

FIG. 1 is a diagram of a wireless communication system applicable to an embodiment of this application;
FIG. 2 is a diagram of an SL slot structure and PSFCH resource configuration;
FIG. 3 is a diagram of a HARQ feedback half-duplex problem;
FIG. 4 is a diagram of a sidelink communication method 400 according to an embodiment of this application;
FIG. 5 is a diagram of sending first feedback information through a PSSCH applicable to an embodiment of this application;
FIG. 6 is a diagram of sending first feedback information by using second SCI applicable to an embodiment of this application;
FIG. 7 is a diagram of communication between a second terminal device and a first terminal device applicable to an embodiment of this application;
FIG. 8 is a diagram of SCI #1 applicable to an embodiment of this application;
FIG. 9 is another diagram of communication between a second terminal device and a first terminal device applicable to an embodiment of this application;
FIG. 10 is a diagram of a HARQ codebook applicable to an embodiment of this application;
FIG. 11 is another diagram of a HARQ codebook applicable to an embodiment of this application;
FIG. 12 is a diagram of an association relationship between a resource position of a HARQ codebook and a resource position of data;
FIG. 13 is a diagram in which SCI #1 occupies all symbols applicable to an embodiment of this application;
FIG. 14 is a block diagram of a communication apparatus 1400 according to an embodiment of this application;
FIG. 15 is a block diagram of a communication apparatus 1500 according to an embodiment of this application; and
FIG. 16 is a block diagram of a chip system 1600 according to an embodiment of this application.

**DESCRIPTION OF EMBODIMENTS**

The following describes the technical solutions in embodiments of this application with reference to the accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V refers to communication between vehicles. V2P refers to communication between a vehicle and a person (including a pedestrian, a bicycle rider, a driver, or a passenger). V2I refers to communication between a vehicle and an infrastructure. The infrastructure is, for example, a road side unit (road side unit, RSU) or a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU. V2N refers to communication between a vehicle and a network device. It may be understood that the foregoing descriptions are examples, and are not limited in embodiments of this application. For example, V2X may further include NR system-based V2X communication in current 3GPP Rel-16 and later releases.

An example is used for description. The D2D communication may include communication between a programmable logic controller (programmable logic controller, PLC) and a subordinate device of the programmable logic controller, for example, communication between the PLC and a sensor, or communication between the PLC and an actuator. The sensor may be, for example, a pressure sensor or a temperature sensor. The actuator may be, for example, a valve terminal or a heater. For example, the PLC receives, in each time period, data measured by all sensors, and sends an execution instruction to the actuator in each time period.

A terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In embodiments of this application, an apparatus configured to implement a function of a terminal device may be a terminal device, or may be an apparatus that can support a terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that undertakes a base station function in D2D, V2X, or M2M communication, a network side device in a 6G network, a device that undertakes a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement a function of a network device may be a network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including an indoor or outdoor device, a handheld device, or a vehicle-mounted device; or may be deployed on a water surface; or may be deployed on a plane, a balloon, or a satellite in the air. A scenario in which the network device and the terminal device are located is not limited in embodiments of this application.

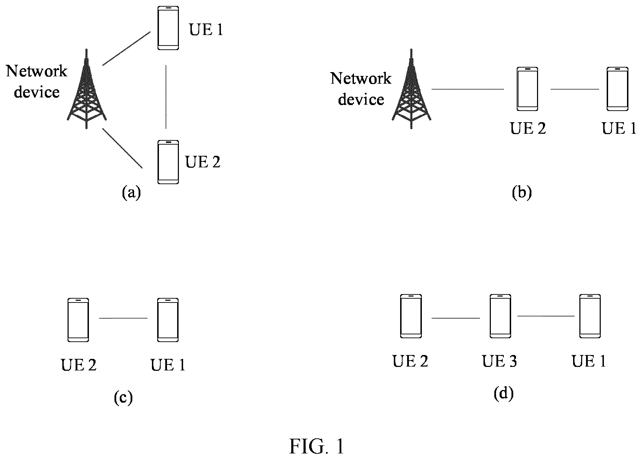

First, a communication system applicable to embodiments of this application is briefly described below with reference to FIG. 1.

FIG. 1 is a diagram of a wireless communication system applicable to an embodiment of this application. As shown in FIG. 1, the wireless communication system may include at least one terminal device, such as UE 1, UE 2, and UE 3 shown in FIG. 1. Optionally, the wireless communication system may further include at least one network device, for example, a network device shown in FIG. 1.

The network device and the terminal device may communicate with each other. For example, the network device and the terminal device may communicate with each other through a Uu interface, and a link (link) for communication between the network device and the terminal device may be denoted as a Uu link. As shown in (a) in FIG. 1, the network device and the UE 1 may directly communicate with each other. As shown in (b) in FIG. 1, the network device and the UE 1 may alternatively communicate with each other through the UE 2. Similarly, the network device and the UE 2 may directly communicate with each other, or the network device and the UE 2 may communicate with each other through the UE 1. It may be understood that, the Uu link represents a connection relationship between the terminal device and the network device, and is a logical concept rather than a physical entity. A main link is merely named for differentiation, and a specific name of the main link does not limit the protection scope of this application.

Terminal devices may also communicate with each other. For example, the terminal devices may directly communicate with each other. As shown in (a) to (c) in FIG. 1, the UE 1 and the UE 2 may directly communicate with each other. For another example, the terminal devices may communicate with each other through another device, for example, a network device or a terminal device. As shown in (a) in FIG. 1, the UE 1 and the UE 2 may communicate with each other through the network device. As shown in (d) in FIG. 1, the UE 1 and the UE 2 may communicate with each other through the UE 3. An interface for communication between the terminal devices may be denoted as a proximity-based services communication 5 (proximity-based services communication 5, PC5) interface, a link for communication between the terminal devices may be denoted as a sidelink (sidelink, SL), and communication between the terminal devices may also be denoted as SL communication. The sidelink may also be referred to as a side link, a secondary link, or the like. It may be understood that the sidelink represents a connection relationship between the terminal devices, and is a logical concept rather than a physical entity. The sidelink is merely named for differentiation, and a specific name of the sidelink does not limit the protection scope of this application.

In an example, SL communication between terminal devices may be used in an internet of vehicles or an intelligent transportation system (intelligent transportation system, ITS), for example, the V2X communication described above.

Optionally, SL communication between terminal devices may be performed in network coverage, or may be performed without network coverage. As shown in (a) and (b) in FIG. 1, the UE 1 and other UE may communicate with each other in network coverage. Alternatively, as shown in (c) and (d) in FIG. 1, the UE 1 and other UE may communicate with each other outside a network coverage area (out-of-coverage).

Optionally, configuration information used during SL communication between terminal devices, for example, a time-frequency resource used during the SL communication between the terminal devices, may be configured or scheduled by a network device, or may be autonomously selected by the terminal device. This is not limited.

It may be understood that FIG. 1 is merely a simplified diagram of an example for ease of understanding. The wireless communication system may further include another network device or may further include another terminal device, which is not shown in FIG. 1. Embodiments of this application are applicable to any communication scenario in which a transmitter device communicates with a receiver device.

For ease of understanding embodiments of this application, the following briefly describes several terms in this application.

1. Resource pool

SL communication may be performed based on a resource pool (resource pool). The resource pool refers to a time-frequency resource dedicated to SL communication; or the resource pool may be understood as a set of resources that can be used for SL communication, that is, a set of time domain resources and frequency domain resources used for SL communication.

A resource pool used for SL communication may be briefly referred to as a resource pool, or may be referred to as an SL resource pool. For brevity, the following uses the resource pool for description. The resource pool may also be referred to as a channel (channel), an operating channel (operating channel), a nominal channel (nominal channel bandwidth), or a bandwidth (bandwidth). In other words, the resource pool, the channel, and the bandwidth all represent a set of resources that can be used for SL communication. A name of the resource pool is not limited.

2. Resource

Data or information may be carried on a resource.

In time domain, a resource may include one or more time domain units (or may be referred to as time units). A time domain unit may be a symbol, a mini-slot (mini-slot), a slot (slot), a partial slot (partial slot), a subframe (subframe), a radio frame (frame), or the like.

In frequency domain, a resource may include one or more frequency domain units. A frequency domain unit may be a resource element (resource element, RE), a resource block (resource block, RB), a subchannel (subchannel), a subband (subband), a resource pool (resource pool), a bandwidth (bandwidth), a bandwidth part (bandwidth part, BWP), a carrier (carrier), a channel (channel), an interlace (interlace) RB, or the like.

3. Priority

UE may send a plurality of services at the same time, and priorities of the plurality of services may be different. Therefore, a priority of the UE may also be described as a service priority of the UE. The service priority of the UE is specifically a transmission priority (transmission priority) of the UE.

The service priority may also be referred to as an L1 priority (L1 priority), a physical layer priority, a priority carried in sidelink control information (sidelink control information, SCI), a priority corresponding to a physical sidelink shared channel (physical sidelink shared channel, PSSCH) associated with SCI, a transmission priority, a priority of sending a PSSCH, a priority for resource selection, a priority of a logical channel, or a highest-level priority of a logical channel.

There may be a correspondence between a priority level and a priority value. For example, a higher priority level corresponds to a smaller priority value, or a lower priority level corresponds to a smaller priority value. In an example in which a higher priority level corresponds to a smaller priority value, the priority value may be an integer ranging from 1 to 8 or an integer ranging from 0 to 7. If the priority value ranges from 1 to 8, the priority value 1 indicates a highest-level priority.

4. Identifier (identifier, ID) of a terminal device

An identifier of a terminal device may also be referred to as an address of the terminal device, and is an identifier that indicates, identifies, or corresponds to a corresponding terminal device. For example, the terminal device may use an index or a number that uniquely identifies the terminal device. The identifier may be configured via signaling, preconfigured, or predefined. In an example, the identifier of the terminal device is any one of the following: a medium access control (medium access control, MAC) address, a subscriber identity module (subscriber identity module, SIM) card number, an international mobile equipment identity (international mobile equipment identity, IMEI), and the like of the terminal.

Optionally, the identifier of the terminal device may alternatively be an identifier that indicates, identifies, or corresponds to a corresponding terminal device during transmission. The identifier may be configured via signaling, preconfigured, or predefined. For example, the identifier is an IP address, a network temporary identifier (radio network temporary identifier, RNTI), a source identifier of a sending device, or a destination identifier of a receiving device. Optionally, the source identifier of the sending device may be an identifier associated with a specific to-be-sent service or message. Optionally, the destination identifier of the receiving device may be an identifier associated with a specific to-be-received service or message.

5. Hybrid automatic repeat request (hybrid automatic repeat request, HARQ)

In a data transmission process, a transmission bit error or a packet loss may occur. Robustness of data transmission can be improved by using a HARQ mechanism.

In the HARQ mechanism, after a transmitter sends data to a receiver, the receiver may send a HARQ feedback to the transmitter, to indicate whether the data is correctly received. For example, if the receiver correctly receives the data, the receiver sends an acknowledgment (acknowledgment, ACK) to the transmitter, and the transmitter considers, based on the ACK, that the data is correctly received and does not need to be retransmitted. If the receiver does not correctly receive the data, the receiver sends a negative acknowledgment (negative acknowledgment, NACK) to the transmitter, and the transmitter considers, based on the NACK, that the data is not correctly received and needs to be retransmitted.

In existing SL communication, a transmitter sends data through a PSSCH, and sends sidelink control information (sidelink control information, SCI) through a physical sidelink control channel (physical sidelink control channel, PSCCH) associated with the PSSCH, and a receiver sends a HARQ feedback through a PSFCH. Specifically, after receiving the data sent by the transmitter, the receiver sends the HARQ feedback through the PSFCH. A PSFCH resource may be a periodic resource configured in a resource pool, and the PSFCH resource represents a resource for transmitting a PSFCH.

The PSFCH resource may be a periodic resource configured in a resource pool. For example, it is assumed that a period parameter is a parameter "periodPSFCHresource". In an example, a value of the parameter "periodPSFCHresource" may be 0, 1, 2, or 4. If the value of the parameter "periodPSFCHresource" is 0, it indicates that there is no PSFCH resource in the resource pool, that is, a resource in the resource pool cannot be used to transmit a PSFCH. If the value of the parameter "periodPSFCHresource" is 1, it indicates that there is a PSFCH resource in each slot in the resource pool. If the value of the parameter "periodPSFCHresource" is 2, it indicates that there is a PSFCH resource in one of every two slots in the resource pool. If the value of the parameter "periodPSFCHresource" is 4, it indicates that there is a PSFCH resource in one of every four slots in the resource pool.

In addition, considering processing time of the receiver, a minimum slot gap between a resource for receiving the data and a resource for sending the HARQ feedback, that is, a minimum slot gap between a PSSCH resource and a PSFCH resource, is configured for the resource pool. It is assumed that the minimum slot gap between the PSSCH resource and the PSFCH resource is represented by a parameter "MinTimeGapPSFCH". In an example, a value of the parameter "MinTimeGapPSFCH" may be 2 or 3. If the value of the parameter "MinTimeGapPSFCH" is 2, it indicates that the minimum slot gap between the PSSCH resource for receiving the data and the PSFCH resource for sending the HARQ feedback for the data is two slots. If the value of the parameter "MinTimeGapPSFCH" is 3, it indicates that the minimum slot gap between the PSSCH resource for receiving the data and the PSFCH resource for sending the HARQ feedback for the data is three slots. In actual communication, an association relationship or a mapping relationship between the PSSCH resource for receiving the data and the PSFCH resource for sending the HARQ feedback for the data may be determined based on the parameter "periodPSFCHresource" and the parameter "MinTimeGapPSFCH".

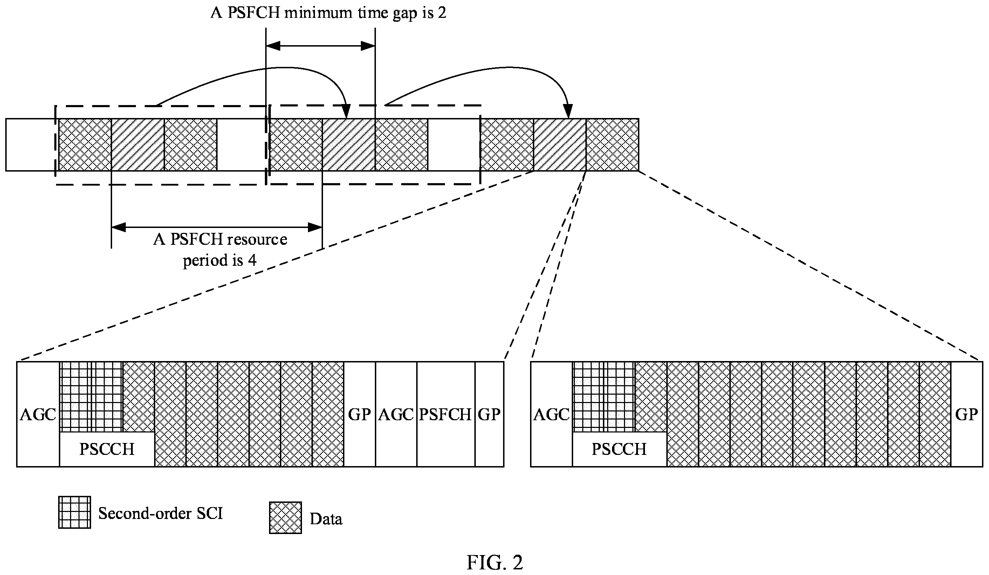

FIG. 2 is a diagram of an SL slot structure and PSFCH resource configuration. As shown in FIG. 2, a value of a parameter "periodPSFCHresource" is 4, that is, there is a PSFCH resource in one of every four slots, and it is assumed that each slot includes 14 symbols. For a slot without a PSFCH resource, the first symbol is an automatic gain control (automatic gain control, AGC) symbol, and is mainly used by a receiver to adjust an amplification multiple of a received signal; and the last symbol is a guard period (guard period, GP) symbol, and is mainly used for receiving-to-sending conversion or sending-to-receiving conversion. For a slot with a PSFCH resource, there are resource overheads of three additional symbols, and the three symbols are respectively a GP symbol, an AGC symbol, and a PSFCH symbol. In addition, as shown in FIG. 2, because the value of the parameter "periodPSFCHresource" is 4, and a value of a parameter "MinTimeGapPSFCH" is 2, a PSSCH resource in every four slots is associated with a PSFCH resource in one slot, and each of the four slots is separated by at least two slots from the slot in which the associated PSFCH resource is located.

It can be learned from the foregoing that if each slot is configured with a PSFCH resource, system overheads are excessively high. If not all slots are configured with a PSFCH resource, the receiver needs to wait for a slot with a PSFCH resource to perform feedback, and an ultra-low latency requirement (for example, an end-to-end latency requirement of 1 to 4 ms) of a service like the industrial internet may not be satisfied.

In addition, when HARQ feedback is performed through a PSFCH resource, a half-duplex problem may occur, resulting in a decrease in reliability. Specifically, if not all slots are configured with a PSFCH resource, a terminal device may need to send a HARQ feedback and receive a HARQ feedback on a PSFCH resource in one slot. Consequently, a half-duplex problem occurs.

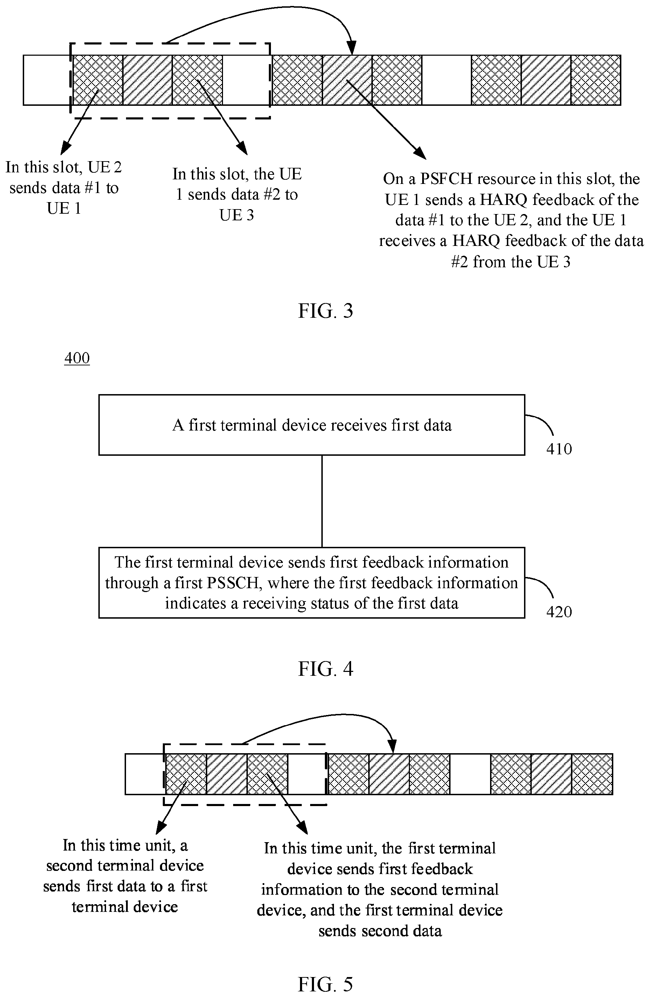

FIG. 3 is a diagram of a HARQ feedback half-duplex problem. As shown in FIG. 3, the second to fifth slots are associated with a PSFCH resource in the seventh slot. When UE 2 sends data (for example, denoted as data #1) to UE 1 in the second slot, the UE 1 needs to send a HARQ feedback for the data #1 to the UE 2 by using the PSFCH resource in the seventh slot. In addition, when the UE 1 sends data (for example, denoted as data #2) to UE 3 in the fourth slot, the UE 1 needs to receive, in the seventh slot, a HARQ feedback that is for the data #2 and that is sent by the UE 3. If the UE 2 is a time division duplex device, the UE 2 can perform only sending or receiving at a same moment, and cannot perform sending and receiving at the same time. Therefore, the UE 2 cannot send the HARQ feedback and receive the HARQ feedback in the seventh slot at the same time, thereby reducing reliability.

In view of this, this application provides a solution. In SL communication, feedback information such as a HARQ feedback for data is sent through a PSSCH.

The foregoing briefly describes terms used in this application, and details are not described in the following embodiments. In addition, the foregoing descriptions of the terms are merely descriptions for ease of understanding, and do not limit the protection scope of embodiments of this application.

It may be understood that the term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

It may be further understood that, in this application, an "indication" may include a direct indication, an indirect indication, an explicit indication, or an implicit indication. When a piece of indication information is described as indicating A, it may be understood that the indication information carries A, directly indicates A, or indirectly indicates A.

In this application, information indicated by indication information is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The following describes in detail a method provided in embodiments of this application with reference to the accompanying drawings. Embodiments provided in this application may be applied to the network architecture shown in FIG. 1. This is not limited.

FIG. 4 is a diagram of a sidelink communication method 400 according to an embodiment of this application. The method 400 may include the following steps.

410: A first terminal device receives first data.

The first data may represent data sent by one terminal device to the first terminal device, for example, data sent by a second terminal device to the first terminal device; or the first data may represent data sent by at least two terminal devices to the first terminal device. This is not limited. In the following embodiments, an example in which the second terminal device sends the first data to the first terminal device is mainly used for description.

420: The first terminal device sends first feedback information through a first PSSCH, where the first feedback information indicates a receiving status of the first data.

If the first data represents data sent by one terminal device (for example, the second terminal device) to the first terminal device, in step 420, the first terminal device sends the first feedback information to the second terminal device through the first PSSCH, that is, the first terminal device sends the first feedback information to the second terminal device on the first PSSCH. If the first data represents data sent by at least two terminal devices to the first terminal device, in step 420, the first terminal device sends the first feedback information to the at least two terminal devices through the first PSSCH, that is, the first terminal device sends the first feedback information to the at least two terminal devices on the first PSSCH.

The first PSSCH is named for differentiation. In the following embodiments, for brevity, the first PSSCH is referred to as a PSSCH for short.

Based on this embodiment of this application, after receiving the first data, the first terminal device sends feedback information (namely, the first feedback information) for the first data through the PSSCH. Compared with sending the feedback information through a PSFCH, this can avoid a latency caused because feedback information of data cannot be fed back in a timely manner when a period of a PSFCH resource is long.

The feedback information may indicate a receiving condition of the data, or the feedback information may indicate a receiving status of the data, that is, the feedback information indicates whether a terminal device successfully receives the data, or the feedback information may indicate whether a terminal device that sends the data needs to retransmit the data. For example, if the first terminal device successfully receives and successfully decodes the first data, the first feedback information sent by the first terminal device through the PSSCH is an acknowledgment, for example, an ACK; or if the first terminal device does not receive the first data and/or fails to decode the first data, the first feedback information sent by the first terminal device through the PSSCH is a negative acknowledgment, for example, a NACK. For example, the feedback information may also be replaced with a HARQ feedback.

In this embodiment of this application, for differentiation and ease of description, data received by the first terminal device is denoted as the first data, and feedback information for the first data is referred to as the first feedback information for short. In other words, the first feedback information indicates a receiving condition of the first data, or the first feedback information indicates the receiving status of the first data, that is, the first feedback information indicates whether the first terminal device successfully receives the first data. In addition, second data is further mentioned in the following embodiments, and the second data represents data sent by the first terminal device through a PSSCH. Details are not described below again.

FIG. 5 is a diagram of sending first feedback information through a PSSCH applicable to an embodiment of this application. As shown in FIG. 5, the second terminal device sends the first data to the first terminal device in the second time unit (for example, the second slot) through the PSSCH. For example, the first terminal device may send the first feedback information to the second terminal device in the fourth time unit through the PSSCH. In this manner, a latency for the feedback information can be reduced.

Optionally, the feedback information is carried in SCI #1. The first feedback information is used as an example. Based on this, the first feedback information may be carried in the SCI #1.

For example, the SCI #1 may be first-order SCI, or may be second-order SCI, or may be newly defined SCI (for example, referred to as third-order SCI). This is not limited.

In an example, the SCI #1 includes feedback information of at least one terminal device. For example, the SCI #1 includes feedback information of at least two terminal devices. For example, the SCI #1 includes feedback information (for example, the first feedback information) sent by the first terminal device to the second terminal device, and feedback information sent by a fourth terminal device to a third terminal device.

In another example, the SCI #1 includes feedback information sent by one terminal device to at least one terminal device. For example, the SCI #1 includes feedback information sent by one terminal device to at least two terminal devices. For example, the SCI #1 includes feedback information (for example, the first feedback information) sent by the first terminal device to the second terminal device, and feedback information sent by the first terminal device to a fourth terminal device.

In another example, the SCI #1 includes feedback information that is for at least one piece of data and that is sent by one terminal device to another terminal device. For example, the SCI #1 includes feedback information that is for at least two pieces of data and that is sent by one terminal device to another terminal device. For example, the SCI #1 includes feedback information that is for the first data and that is sent by the first terminal device to the second terminal device, and feedback information that is for third data and that is sent by the first terminal device to the second terminal device.

It may be understood that the foregoing is an example for description, and is not limited. For example, one piece of SCI #1 may include one piece of feedback information. When there are a plurality of pieces of feedback information, the plurality of pieces of feedback information may be carried by using a plurality of pieces of SCI #1.

The following describes several possible implementations of the PSSCH (that is, the first PSSCH).

In a first possible implementation, the PSSCH includes first SCI and second SCI, and the second SCI includes the first feedback information.

Based on this implementation, in step 420, the first terminal device sends the first SCI and the second SCI through the first PSSCH, where the second SCI includes the first feedback information, and the first feedback information indicates the receiving status of the first data. It may be understood that the first SCI and the second SCI may be sent to a same terminal device, or may be sent to different terminal devices. This is not limited.

For example, the first SCI is second-order SCI, and the second SCI is newly defined SCI (for example, referred to as third-order SCI). The first feedback information is carried in the newly defined SCI, so that the feedback information for the first data can be quickly fed back, and existing first-order SCI and second-order SCI are modified slightly, or even the existing first-order SCI and second-order SCI may not be modified. Therefore, an existing protocol is modified slightly.

Optionally, in this implementation, the PSSCH further includes data (denoted as second data for differentiation). In other words, in step 420, the first terminal device sends the first SCI, the second SCI, and the second data through the PSSCH. The second data and the second SCI may be sent to a same terminal device, or may be sent to different terminal devices. This is not limited. Based on this, if the PSSCH further includes the second data, and the second SCI and the second data are sent to different terminal devices, a terminal device that needs to receive only the second SCI (namely, the first feedback information) may not decode the first SCI and/or the second data, and a terminal device that needs to receive only the second data may not decode the second SCI, thereby reducing decoding complexity and power consumption.

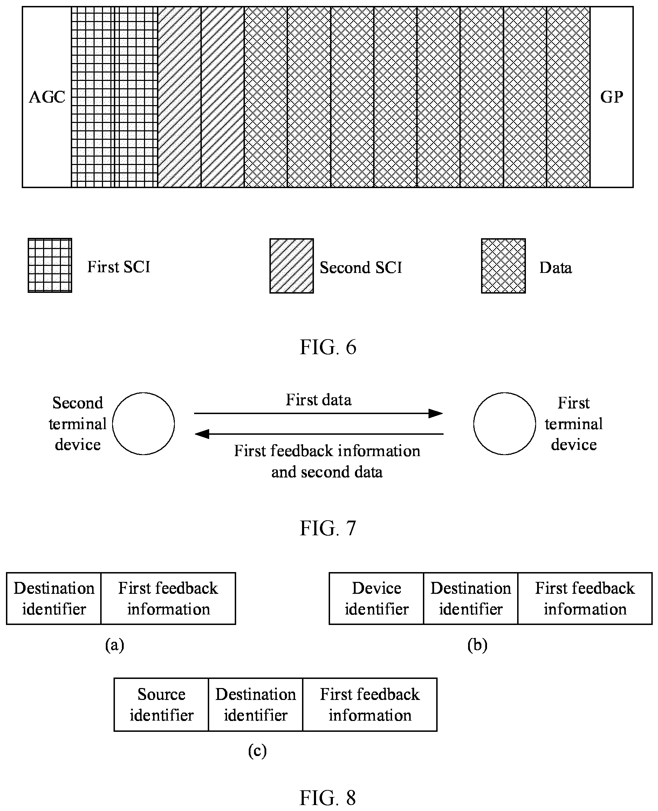

FIG. 6 is a diagram of sending first feedback information by using second SCI applicable to an embodiment of this application. As shown in FIG. 6, the first symbol may be an AGC symbol, the last symbol may be a GP symbol, and intermediate symbols may be a PSSCH. The PSSCH may include the first SCI, the second SCI, and the data (for example, referred to as second data), and the second SCI includes the first feedback information. It may be understood that, if the PSSCH includes the second SCI, when the first terminal device sends data through the PSSCH, a resource element occupied by the second SCI may be excluded when a transport block (transport block, TB) size is calculated. It may be understood that FIG. 6 is an example for description, and is not limited. For example, in the example shown in FIG. 6, first-order SCI may be further included, and the first-order SCI may be sent on a PSCCH. For example, in the example shown in FIG. 6, if the first-order SCI is included, the first-order SCI may be located on an early symbol (for example, a symbol after the AGC and before the PSSCH).

In a second possible implementation, the PSSCH includes first SCI and second data, and the first SCI includes the first feedback information.

Based on this implementation, in step 420, the first terminal device sends the first SCI and the second data through the first PSSCH, where the first SCI includes the first feedback information, and the first feedback information indicates the receiving status of the first data. It may be understood that the first SCI and the second data may be sent to a same terminal device, or may be sent to different terminal devices. This is not limited.

For example, the first SCI is second-order SCI. The first feedback information is carried in the second-order SCI, so that the feedback information for the first data can be quickly fed back.

In a third possible implementation, the PSSCH includes first SCI and second data, and the second data includes the first feedback information.

Based on this implementation, in step 420, the first terminal device sends the first SCI and the second data through the first PSSCH, where the second data includes the first feedback information, and the first feedback information indicates the receiving status of the first data. It may be understood that the first SCI and the second data may be sent to a same terminal device, or may be sent to different terminal devices. This is not limited.

For example, the first SCI is second-order SCI.

That the second data includes the first feedback information may be, for example, that a MAC header of the second data includes the first feedback information. The first feedback information is carried in the data sent by the first terminal device to the second terminal device, so that the first feedback information can be quickly fed back, and the first feedback information can be further transmitted by reusing the second data, thereby reducing signaling overheads.

In a fourth possible implementation, the PSSCH includes second SCI, and the second SCI includes the first feedback information.

Based on this implementation, in step 420, the first terminal device sends the second SCI through the first PSSCH, where the second SCI includes the first feedback information, and the first feedback information indicates the receiving status of the first data.

For example, the second SCI is newly defined SCI (for example, referred to as third-order SCI). The first feedback information is carried in the newly defined SCI, so that the feedback information for the first data can be quickly fed back, and existing first-order SCI and second-order SCI are modified slightly, or even the existing first-order SCI and second-order SCI may not be modified. Therefore, an existing protocol is modified slightly.

Optionally, in this implementation, the PSSCH further includes first SCI and/or data (denoted as second data for differentiation). In other words, in step 420, the first terminal device sends the second SCI, and the first SCI and/or the second data through the PSSCH. It may be understood that the second SCI and the first SCI and/or the second data may be sent to a same terminal device, or may be sent to different terminal devices. This is not limited.

It may be understood that the foregoing several possible implementations are examples for description, and are not limited.

Optionally, the second data and the first feedback information are in a same time unit. In other words, a time unit in which the first terminal device sends the first feedback information to a second terminal device through a PSSCH may be a time unit in which the first terminal device sends the second data. The second data may be sent by the first terminal device to the second terminal device, or may be sent by the first terminal device to another terminal device. In this way, a half-duplex problem caused when the first terminal device needs to simultaneously send feedback information and receive feedback information in a same time unit can be avoided.

As shown in FIG. 5, the first terminal device sends the second data in the fourth time unit through the PSSCH, and the first terminal device may send the first feedback information (that is, feedback information for data received by the first terminal device in the second time unit) to the second terminal device in the fourth time unit through the PSSCH. The second data and the first feedback information may be sent to a same terminal device, or may be sent to different terminal devices. This is not limited. In this way, a latency in sending the first feedback information to the second terminal device by the first terminal device in the seventh time unit through a PSFCH can be reduced, and a half-duplex problem caused when the first terminal device needs to simultaneously send feedback information and receive feedback information in the seventh time unit can be avoided.

It may be understood that the foregoing is an example for description, and is not limited. For example, if the first terminal device does not have data to be sent to another terminal device between the third time unit and the seventh time unit, the first terminal device may alternatively separately send the first feedback information through the PSSCH, so that a latency for the first feedback information can be reduced.

Optionally, the second terminal device sends first indication information to the first terminal device, where the first indication information indicates the first terminal device whether to send the first feedback information to the second terminal device through a PSSCH. In this way, if the second terminal device sends the first indication information, and the first indication information indicates the first terminal device to send the first feedback information to the second terminal device through the PSSCH, the second terminal device may blindly detect a PSCCH, and decode, based on the detected PSCCH, the PSSCH associated with the PSCCH, to obtain the first feedback information. Otherwise, a PSCCH may not need to be blindly detected, to avoid excessively high blind detection power consumption. Specifically, the another terminal device may determine, based on the detected PSCCH, the format of the PSSCH associated with the PSCCH, and then determine whether the PSSCH includes the feedback information.

Further, optionally, the second terminal device blindly detects a PSCCH within a specific time range, to determine whether there is feedback information sent to the second terminal device.

In an example, the specific time range may be: (T0+T1) to (T0+T2). T0 is an index of a time unit (for example, a slot) in which the second terminal device sends the first data. T1 is a minimum quantity of time units required from receiving the data by the first terminal device to sending the first feedback information by the first terminal device. In other words, at least T1 time units are required from receiving the data by the first terminal device to sending the first feedback information by the first terminal device. T2 is a preset value, for example, may be a predefined value, or may be a preconfigured value (for example, preconfigured by the second terminal device), or may be a time unit difference between a time unit in which the second terminal device sends the data and a time unit in which an associated PSFCH resource is located. This is not limited.

For example, the first indication information may be carried in SCI #2, for example, first-order SCI or second-order SCI. This is not limited.

In a possible implementation, the first indication information is implemented by using at least one bit. For example, it is assumed that one bit is used to indicate the first terminal device whether to send the first feedback information to the second terminal device through the PSSCH. If the bit is set to "1", it indicates that the second terminal device indicates the first terminal device to send the first feedback information to the second terminal device through the PSSCH, that is, the first terminal device sends the first feedback information to the second terminal device through the PSSCH. If the bit is set to "0", it indicates that the second terminal device indicates the first terminal device not to send the first feedback information to the second terminal device through the PSSCH, that is, the first terminal device does not send the first feedback information to the second terminal device through the PSSCH. It should be understood that the foregoing is merely an example for description, and is not limited.

In another possible implementation, the first indication information is a specific field. For example, the first indication information is carried in SCI #2, and whether the SCI #2 includes the specific field is used to indicate the first terminal device whether to send the first feedback information to the second terminal device through the PSSCH. For example, if the SCI #2 includes the specific field, it indicates that the second terminal device indicates the first terminal device to send the first feedback information to the second terminal device through the PSSCH, that is, the first terminal device sends the first feedback information to the second terminal device through the PSSCH. If the SCI #2 does not include the specific field, it indicates that the second terminal device indicates the first terminal device not to send the first feedback information to the second terminal device through the PSSCH, that is, the first terminal device does not send the first feedback information to the second terminal device through the PSSCH.

Optionally, the first terminal device sends second indication information, where the second indication information is used to decode the first feedback information. For example, the first terminal device may send the second indication information to the second terminal device. For example, the first terminal device directly sends the second indication information to the second terminal device. For another example, the first terminal device sends the second indication information to the second terminal device through another device. For example, if the first terminal device receives the first data from the second terminal device, and sends the first feedback information to the second terminal device through the PSSCH, the first terminal device may send the second indication information to the second terminal device. The following uses an example in which the first terminal device sends the second indication information to the second terminal device for description.

For example, the second indication information may be carried in SCI #3, for example, first-order SCI or second-order SCI. This is not limited. For example, the PSSCH may be associated with one PSCCH, first-order SCI carried on the PSCCH may carry the second indication information, and the second terminal device decodes the first feedback information based on the second indication information carried in the first-order SCI.

Optionally, the second indication information includes at least one of the following information: a format of the first feedback information, a channel coding rate of the first feedback information, a modulation scheme of the first feedback information, a quantity of bits included in the first feedback information, and a resource occupied by the first feedback information on the PSSCH.

Example 1: The second indication information includes the format of the first feedback information.

For example, the first feedback information is carried in the SCI #1, the SCI #1 has different formats, and each format corresponds to a specific quantity of bits. The second indication information may include the format of the SCI #1. In this way, the second terminal device may learn, based on the format of the SCI #1, of a quantity of bits corresponding to the SCI #1, and then can accurately decode the feedback information in the SCI #1.

Example 2: The second indication information includes the channel coding rate of the first feedback information.

Based on this example, the second indication information may include the channel coding rate of the first feedback information. In this way, the second terminal device may learn of the channel coding rate of the first feedback information based on the second indication information. For example, the first feedback information is carried in the SCI #1, and the second indication information may carry a beta-offset indicator (beta-offset indicator) of the SCI #1, for example, denoted as $\beta_{offset}^{SCI\#1}$. In this way, the second terminal device can learn of a channel coding rate of the SCI #1, and the channel coding rate of the SCI #1 is the channel coding rate of the first feedback information. The channel coding rate of the SCI #1 satisfies formula 1.

$$R_{SCI\#1} = R_{data}\big/\beta_{offset}^{SCI\#1}$$

<div align="right">Formula 1</div>

$R_{SCI\#1}$ represents the channel coding rate of the SCI #1, and $R_{data}$ represents a channel coding rate of data.

Channel coding rates of the second-order SCI and the SCI #1 may be the same or may be different. This is not limited. For example, a network device may indicate, to a terminal device (for example, the first terminal device or the second terminal device), that the channel coding rates of the second-order SCI and the SCI #1 are the same or different. For another example, a terminal device (for example, the first terminal device or the second terminal device) may learn, by using configuration information of a resource pool, that the channel coding rates of the second-order SCI and the SCI #1 are the same or different. For example, the channel coding rates of the second-order SCI and the SCI #1 are preconfigured to be the same or different in the resource pool.

It may be understood that if the channel coding rates of the second-order SCI and the SCI #1 are the same, the second-order SCI and the SCI #1 may reuse a same beta-offset indicator. For example, $\beta_{offset}^{SCI2}$ is carried in the first-order SCI, and $\beta_{offset}^{SCI2}$ represents a beta offset of the second-order SCI. Because the channel coding rates of the second-order SCI and the SCI #1 are the same, the SCI #1 may reuse $\beta_{offset}^{SCI2}$ carried in the first-order SCI. In other words, $\beta_{offset}^{SCI2}$ carried in the first-order SCI may also be considered as the beta offset of the SCI #1. In this case, the channel coding rates of the second-order SCI and the SCI #1 satisfy formula 2.

$$R_{SCI2} = R_{SCI\#1} = R_{data}\big/\beta_{offset}^{SCI2}$$

<div align="right">Formula 2</div>

$R_{SCI2}$ represents the channel coding rate of the second-order SCI.

It should be noted that a method for obtaining $R_{data}$ is not limited in embodiments of this application. For example, $R_{data}$ may be obtained by using a modulation and coding scheme (modulation and coding scheme, MCS). For example, there is a correspondence between an MCS index and a channel coding rate, and the correspondence may exist, for example, be stored or transmitted, in a form of a table, a function, a text, or a character string. Table 1 is an example of presenting a correspondence between an MCS index and $R_{data}$ in a form of a table.

<div align="center">Table 1</div>

| MCS index | $R_{data}$ |
|-----------|-----------|
| MCS #1 | $R_{data}$ #1 |
| MCS #2 | $R_{data}$ #2 |
| MCS #3 | $R_{data}$ #3 |
| MCS #4 | $R_{data}$ #4 |

Table 1 is used as an example. If the MCS index is MCS #1, $R_{data}$ is $R_{data}$ #1; if the MCS index is MCS #2, $R_{data}$ is $R_{data}$ #2; if the MCS index is MCS #3, $R_{data}$ is $R_{data}$ #3; or if the MCS index is MCS #4, $R_{data}$ is $R_{data}$ #4.

It may be understood that Table 1 is an example for description, and is not limited. Any variation of Table 1 is applicable to embodiments of this application. For example, a specific form of the MCS index is not limited in embodiments of this application. For another example, Table 1 may include more MCS indexes and corresponding $R_{data}$. For another example, Table 1 may further include other information such as a modulation order, that is, a modulation order and $R_{data}$ that are corresponding to the MCS index can be learned based on the index.

Example 3: The second indication information includes the modulation scheme of the first feedback information.

Based on this example, the second indication information includes the modulation scheme of the first feedback information. In this way, the second terminal device may learn of the modulation scheme of the first feedback information based on the second indication information, and then may demodulate the first feedback information by using a corresponding demodulation scheme.

Example 4: The second indication information includes the resource occupied by the first feedback information on the PSSCH.

Based on this example, the second indication information includes the resource occupied by the first feedback information on the PSSCH. In this way, the second terminal device may learn, based on the second indication information, of the resource occupied by the first feedback information on the PSSCH, and then may receive the first feedback information on the corresponding resource.

Example 5: The second indication information includes the quantity of bits included in the first feedback information.

Based on this example, the second indication information includes the quantity of bits included in the first feedback information. In this way, the second terminal device may learn, based on the second indication information, of the quantity of bits occupied by the first feedback information on the PSSCH, and then may accurately decode the first feedback information.

The foregoing briefly lists several examples. It may be understood that the foregoing several examples may alternatively be used in combination, and details are not described herein.

Optionally, the first terminal device sends third indication information, where the third indication information indicates a format of the PSSCH, or indicates whether there is feedback information on the PSSCH. For example, the first terminal device may send the third indication information to the second terminal device. For example, the first terminal device directly sends the third indication information to the second terminal device. For another example, the first terminal device sends the third indication information to the second terminal device through another device. For example, when sending data and/or SCI to the second terminal device through the PSSCH, the first terminal device may send the third indication information to the second terminal device. The following uses an example in which the first terminal device sends the third indication information to the second terminal device for description.

For example, the third indication information may be carried in SCI #3, for example, first-order SCI or second-order SCI. This is not limited. For example, the PSSCH may be associated with one PSCCH, first-order SCI carried on the PSCCH may carry the third indication information, and the second terminal device decodes the PSSCH based on the third indication information carried in the first-order SCI.

The third indication information and the second indication information may be carried in same signaling, for example, carried in first-order SCI, or may be carried in different signaling. This is not limited.

In a possible implementation, the third indication information is implemented by using at least one bit.

For example, it is assumed that one bit is used to indicate the PSSCH format. If the bit is set to "0", it indicates that the PSSCH does not include the feedback information, that is, the first terminal device does not send the first feedback information through the PSSCH. If the bit is set to "1", it indicates that the PSSCH includes the feedback information, that is, the first terminal device sends the first feedback information through the PSSCH. It should be understood that the foregoing is merely an example for description, and is not limited.

For another example, it is assumed that two bits are used to indicate the PSSCH format. As described above, the first terminal device may further send data and/or SCI (for example, second-order SCI) on the PSSCH. Therefore, the third indication information may indicate the format of the PSSCH, that is, whether the PSSCH includes at least one of the following: the data, the SCI (for example, the second-order SCI), or the feedback information. For example, if the bits are set to "00", it indicates that the PSSCH includes the data and the second-order SCI, that is, the first terminal device sends the data and the second-order SCI through the PSSCH. If the bits are set to "01", it indicates that the PSSCH includes the feedback information, that is, the first terminal device sends the first feedback information through the PSSCH. If the bits are set to "10", it indicates that the PSSCH includes the data and the feedback information, that is, the first terminal device sends the data and the first feedback information through the PSSCH. If the bits are set to "11", it indicates that the PSSCH includes the data, the second-order SCI, and the feedback information, that is, the first terminal device sends the data, the second-order SCI, and the first feedback information through the PSSCH. It should be understood that the foregoing is merely an example for description, and is not limited.

The foregoing is an example for description, and is not limited.

For example, a correspondence between the third indication information and the PSSCH format may exist, for example, be stored or transmitted, in a form of a table, a function, a text, or a character string.

It is assumed that the PSSCH includes at least one of the following: second-order SCI, newly defined SCI (for example, referred to as third-order SCI), and data, and the first feedback information is carried in the third-order SCI. Table 2 is an example of presenting the correspondence between the third indication information and the PSSCH format in a form of a table.

Table 2 is used as an example. For example, the third indication information may be implemented by using two bits, that is, the PSSCH format is indicated by using two bits. If the bits are set to "00", it indicates that the PSSCH includes the data and the second-order SCI, that is, the first terminal device sends the data and the second-order SCI through the PSSCH. If the bits are set to "01", it indicates that the PSSCH includes the third-order SCI, that is, the first terminal device sends the third-order SCI through the PSSCH. If the bits are set to "10", it indicates that the PSSCH includes the data, the second-order SCI, and the third-order SCI, that is, the first terminal device sends the data, the second-order SCI, and the third-order SCI through the PSSCH. It should be understood that the foregoing is merely an example for description, and is not limited.

Table 2

| Third indication information | PSSCH format |
|---|---|
| 00 | Data and second-order SCI |
| 01 | Third-order SCI |
| 10 | Data, second-order SCI, and third-order SCI |
| 11 | Reserved |

It may be understood that Table 2 is an example for description, and is not limited. A solution of a variant of Table 2 is also applicable to embodiments of this application.

Optionally, the first terminal device sends at least one of the following: a source identifier of the first feedback information, a destination identifier of the first feedback information, and a device identifier of the first terminal device. For example, the first terminal device may send at least one of the foregoing to the second terminal device. For example, the first terminal device directly sends at least one of the foregoing to the second terminal device, or the first terminal device sends at least one of the foregoing to the second terminal device through another device. For example, when sending the first feedback information to the second terminal device through the PSSCH, the first terminal device may send at least one of the foregoing to the second terminal device. The following uses an example in which the first terminal device sends at least one of the foregoing to the second terminal device for description.

Example 1: The first terminal device sends the source identifier, for example, a layer 1 source identifier or a layer 2 source identifier, of the first feedback information to the second terminal device.

Based on this example, the second terminal device may learn who sends the first feedback information.

Example 2: The first terminal device sends the destination identifier, for example, a layer 1 destination identifier or a layer 2 destination identifier, of the first feedback information to the second terminal device.

Based on this example, the second terminal device may learn that the first feedback information is sent to the second terminal device.

Example 3: The first terminal device sends the device identifier of the first terminal device to the second terminal device.

Based on this example, the second terminal device may learn who sends the first feedback information.

The foregoing separately describes the identifiers. It may be understood that, in actual communication, the first terminal device may alternatively send at least two of the following to the second terminal device: the source identifier of the first feedback information, the destination identifier of the first feedback information, and the device identifier of the first terminal device.

The following provides example descriptions with reference to two possible cases.

In a first possible case, the second data and the first feedback information are sent to a same terminal device.

For example, the first terminal device sends the second data and the first feedback information to the second terminal device. Specifically, the first terminal device sends the second data and the first feedback information to the second terminal device through the PSSCH.

In this case, source identifiers of the first feedback information and the second data are the same, that is, both source identifiers indicate the first terminal device, and destination identifiers of the first feedback information and the second data are also the same, that is, both destination identifiers indicate the second terminal device. Therefore, when the first terminal device sends the first feedback information to the second terminal device, an additional source identifier and destination identifier may not need to be carried, that is, the first feedback information and the second data may reuse same identifier indication information. In this way, signaling overheads can be reduced.

FIG. 7 is a diagram of communication between the second terminal device and the first terminal device applicable to an embodiment of this application. As shown in FIG. 7, the second terminal device sends the first data to the first terminal device, and the first terminal device sends the first feedback information and the second data to the second terminal device. In the scenario shown in FIG. 7, the first terminal device may send second-order SCI to the second terminal device, where the second-order SCI indicates a source identifier and a destination identifier of the second data; and the first terminal device sends SCI #1 (for example, third-order SCI) to the second terminal device, where the SCI #1 includes the first feedback information, and the SCI #1 may not carry a source identifier or a destination identifier. In other words, the SCI #1 may reuse the source identifier and the destination identifier indicated in the second-order SCI.

In a second possible case, the second data and the first feedback information are sent to different terminal devices.

For example, the first terminal device sends the first feedback information to the second terminal device, and the first terminal device sends the second data to a third terminal device. The second terminal device and the third terminal device are different terminal devices. Specifically, the first terminal device sends the first feedback information to the second terminal device through the PSSCH, and the first terminal device sends the second data to the third terminal device through the PSSCH.

In this case, when the first terminal device sends the first feedback information to the second terminal device, the destination identifier may be carried. In this way, the second terminal device can learn that the first feedback information is sent to the second terminal device. Optionally, in this case, when the first terminal device sends the first feedback information to the second terminal device, an identifier of the first terminal device may be further carried. The identifier of the first terminal device may be, for example, a source identifier, or may be the device identifier of the first terminal device. This is not limited. For example, the first feedback information is carried in the SCI #1. It can be learned from the foregoing that an identifier in the SCI #1 may include the following three examples. Example 1: The SCI #1 includes the destination identifier. Example 2: The SCI #1 includes the destination identifier and the device identifier of the first terminal device. Example 3: The SCI #1 includes the destination identifier and the source identifier.

FIG. 8 is a diagram of SCI #1 applicable to an embodiment of this application. As shown in (a) in FIG. 8, the SCI #1 includes the first feedback information and the destination identifier. As shown in (b) in FIG. 8, the SCI #1 includes the first feedback information, the destination identifier, and the device identifier of the first terminal device. As shown in (c) in FIG. 8, the SCI #1 includes the first feedback information, the destination identifier, and the source identifier.

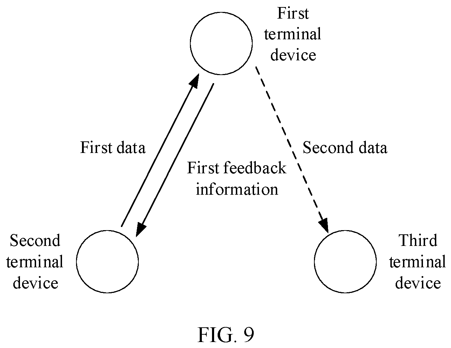

FIG. 9 is another diagram of communication between the second terminal device and the first terminal device applicable to an embodiment of this application. As shown in FIG. 9, the second terminal device sends the first data to the first terminal device, the first terminal device sends the first feedback information to the second terminal device, and optionally, the first terminal device sends the second data to a third terminal device. In the scenario shown in FIG. 9, the first terminal device may send second-order SCI to the third terminal device, where the second-order SCI indicates a source identifier and a destination identifier of the second data, and the source identifier and the destination identifier are identifiers associated with the second data. One terminal device may have a plurality of different services, and the plurality of different services may correspond to different source identifiers and destination identifiers. In other words, one terminal device may include source identifiers and destination identifiers related to a plurality of services. Therefore, the second-order SCI may indicate the source identifier and the destination identifier associated with the second data. The first terminal device sends the SCI #1 (for example, third-order SCI) to the second terminal device. The SCI #1 includes the first feedback information, and the SCI #1 may further carry the destination identifier and the identifier of the first terminal device.

Optionally, whether to support sending of feedback information through a PSSCH and/or whether to support sending of feedback information and data included in a PSSCH to different terminal devices may be (pre)configured for a resource pool.

The following describes several possible solutions of the feedback information.

Solution 1: The first terminal device sends fourth indication information, where the fourth indication information indicates a quantity of TBs corresponding to the first feedback information, the first feedback information includes a HARQ process number (HARQ process number) and/or a bitmap (bitmap) corresponding to each TB, and the bitmap indicates feedback information corresponding to the TB or feedback information corresponding to at least one code block group (code block group, CBG) in the TB. Based on this solution, feedback information corresponding to each TB or a CBG in each TB may be indicated by using a bitmap.

For example, the first terminal device sends the fourth indication information to the second terminal device. The second terminal device may decode the feedback information for the second terminal device based on the fourth indication information. For example, the second terminal device sends a TB 1 to the first terminal device, and the first terminal device sends the fourth indication information to the second terminal device, where the fourth indication information indicates the quantity of TBs corresponding to the first feedback information and a bitmap corresponding to each TB (including the TB 1), and the bitmap indicates feedback information corresponding to the TB 1. The second terminal device may decode, based on the fourth indication information, the feedback information that is for the TB 1 and that is indicated by the bitmap.

A quantity of bits of the bitmap may be preconfigured in the resource pool, or may be determined by the first terminal device, or may be configured by the network device, or may be determined by another terminal device, or may be determined by the first terminal device and another terminal device through negotiation.

In addition, if the TB includes at least one CBG, a maximum quantity of CBGs included in each TB may be preconfigured in the resource pool, or may be determined by the first terminal device, or may be configured by the network device, or may be determined by another terminal device, or may be determined by the first terminal device and another terminal device through negotiation.

It is assumed that the quantity of TBs corresponding to the first feedback information is K. For example, a quantity of bits occupied by the fourth indication information is $\log_2 M$. M represents a maximum quantity of transport blocks corresponding to feedback information of the first terminal device. K and M are integers greater than 1 or equal to 1, and K is less than M or equal to M.

M may be preconfigured in the resource pool, or may be determined by the first terminal device, or may be configured by the network device, or may be determined by another terminal device, or may be determined by the first terminal device and another terminal device through negotiation.

The fourth indication information and the first feedback information may be carried in same signaling, for example, carried in the SCI #1, or may be carried in different signaling. For example, the fourth indication information may be carried in first-order SCI, second-order SCI, or newly defined SCI. This is not limited.

The following describes several possible forms of a HARQ codebook by using an example in which the feedback information is a HARQ feedback and the feedback information is carried in the SCI #1.

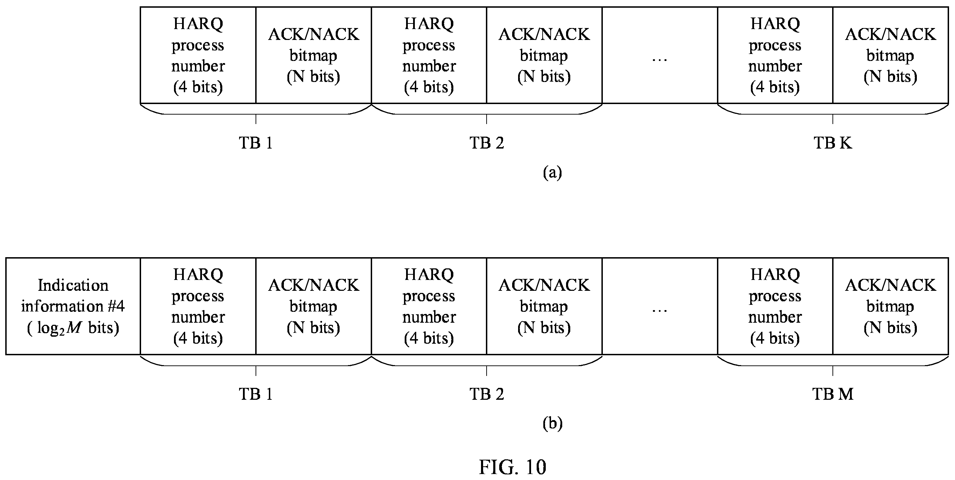

FIG. 10 is a diagram of a HARQ codebook applicable to an embodiment of this application.

As shown in FIG. 10, each TB corresponds to a HARQ process number of Np bits (for example, four bits) and a bitmap of N bits, and the bitmap of N bits indicates feedback information of the TB or a CBG in the TB, for example, an ACK/NACK.

Example 1: As shown in (a) in FIG. 10, the SCI #1 does not include the fourth indication information, and a total quantity of information bits of the SCI #1 is K*(Np+N). Np represents a quantity of bits of the HARQ process number corresponding to each TB, as shown in (a) in FIG. 10. In an example, Np=4.

Based on the example 1, in a possible implementation, a quantity of TBs corresponding to the feedback information in the SCI #1 is preconfigured (for example, preconfigured in the resource pool). Alternatively, in another possible implementation, first-order SCI or second-order SCI may include fourth indication information of $\log_2 M$ bits, and the fourth indication information indicates a quantity of TBs corresponding to the feedback information in the SCI #1.

Example 2: As shown in (b) in FIG. 10, the SCI #1 includes the fourth indication information, the fourth indication information indicates a quantity of TBs corresponding to the feedback information in the SCI #1, and a total quantity of information bits of the SCI #1 is $\log_2 M$ +M*(Np+N). A quantity of bits occupied by the fourth indication information is $\log_2 M$. For meanings of the parameters, refer to descriptions in (a) in FIG. 10. Details are not described herein again.

For example, the form shown in FIG. 10 is applicable to a scenario in which the second data and the first feedback information are sent to a same terminal device. For example, if the first terminal device sends the second data and the first feedback information to the second terminal device, an additional source identifier and destination identifier may not need to be carried when the first terminal device sends the first feedback information to the second terminal device. In other words, the SCI #1 may not need to carry identification information.

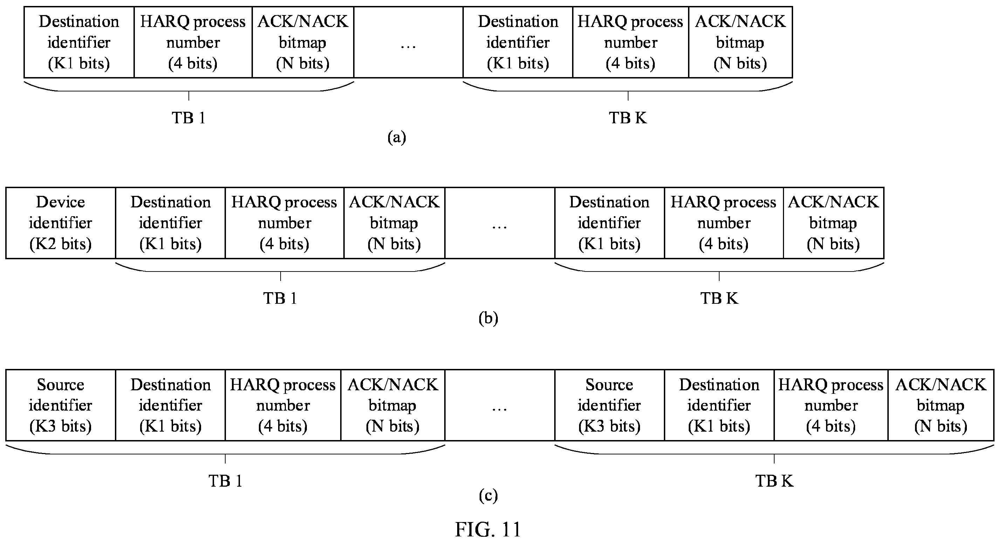

FIG. 11 is another diagram of a HARQ codebook applicable to an embodiment of this application.

Example 1: As shown in (a) in FIG. 11, each TB corresponds to a HARQ process number of Np bits (for example, four bits), a bitmap of N bits, and a destination identifier of K1 bits. The bitmap of N bits indicates feedback information of the TB or a CBG in the TB, for example, an ACK/NACK. In other words, the bitmap of N bits indicates feedback information corresponding to the destination identifier, for example, an ACK/NACK. For example, a total quantity of information bits of the SCI #1 is K*(Np+N+K1), where K1 represents a quantity of bits of the destination identifier.

Specifically, if the second terminal device can identify the device identifier of the first terminal device based on a source identifier indicated in second-order SCI, where the device identifier is a unique identifier of each terminal device, the SCI #1 may carry the destination identifier, and may not need to carry the source identifier or the device identifier. For the second terminal device, a possible manner in which the second terminal device can identify the device identifier of the first terminal device based on the source identifier indicated in the second-order SCI is as follows: The second terminal device and the first terminal device exchange source identifiers and/or destination identifiers related to all possible services in advance, where the source identifiers and/or the destination identifiers may be layer 2 identifiers or layer 1 identifiers.

Based on the example 1, in a possible implementation, a quantity of TBs corresponding to the feedback information in the SCI #1 is preconfigured (for example, preconfigured in the resource pool). Alternatively, in another possible implementation, first-order SCI or second-order SCI may include fourth indication information of $\log_2 M$ bits, and

the fourth indication information indicates a quantity of TBs corresponding to the feedback information in the SCI #1. Alternatively, in another possible implementation, the SCI #1 includes fourth indication information of $\log_2 M$ bits, and the fourth indication information indicates a quantity of TBs corresponding to the feedback information in the SCI #1. In this case, a total quantity of information bits of the SCI #1 is $\log_2 M + M*(Np+N+K1)$, and a valid quantity of TBs (that is, the quantity of TBs corresponding to the feedback information in the SCI #1) may be learned of by using the fourth indication information. For meanings of the parameters, refer to descriptions in (a) in FIG. 10. Details are not described herein again.

Example 2: As shown in (b) in FIG. 11, each TB corresponds to a HARQ process number of Np bits (for example, four bits), a bitmap of N bits, a destination identifier of K1 bits, and a device identifier of K2 bits. The bitmap of N bits indicates feedback information of the TB or a CBG in the TB, for example, an ACK/NACK. In other words, the bitmap of N bits indicates feedback information corresponding to the device identifier and the destination identifier, for example, an ACK/NACK. For example, a total quantity of information bits of the SCI #1 is $K*(Np+N+K1)+K2$, where K2 represents a quantity of bits of the device identifier.

Based on the example 2, in a possible implementation, a quantity of TBs corresponding to the feedback information in the SCI #1 is preconfigured (for example, preconfigured in the resource pool). Alternatively, in another possible implementation, first-order SCI or second-order SCI may include fourth indication information of $\log_2 M$ bits, and the fourth indication information indicates a quantity of TBs corresponding to the feedback information in the SCI #1. Alternatively, in another possible implementation, the SCI #1 includes fourth indication information of $\log_2 M$ bits, and the fourth indication information indicates a quantity of TBs corresponding to the feedback information in the SCI #1. In this case, a total quantity of information bits of the SCI #1 is $\log_2 M + M*(Np+N+K1)+K2$, and a valid quantity of TBs (that is, the quantity of TBs corresponding to the feedback information in the SCI #1) may be learned of by using the fourth indication information. For meanings of the parameters, refer to descriptions in (a) in FIG. 10. Details are not described herein again.

Example 3: As shown in (c) in FIG. 11, each TB corresponds to a HARQ process number of Np bits (for example, four bits), a bitmap of N bits, a destination identifier of K1 bits, and a source identifier of K3 bits. The bitmap of N bits indicates feedback information of the TB or a CBG in the TB, for example, an ACK/NACK. In other words, the bitmap of N bits indicates feedback information corresponding to the source identifier and the destination identifier, for example, an ACK/NACK. For example, a total quantity of information bits of the SCI #1 is $K*(Np+N+K1+K3)$, where K3 represents a quantity of bits of the source identifier.

Based on the example 3, in a possible implementation, a quantity of TBs corresponding to the feedback information in the SCI #1 is preconfigured (for example, preconfigured in the resource pool). Alternatively, in another possible implementation, first-order SCI or second-order SCI may include fourth indication information of $\log_2 M$ bits, and the fourth indication information indicates a quantity of TBs corresponding to the feedback information in the SCI #1. Alternatively, in another possible implementation, the SCI #1 includes fourth indication information of $\log_2 M$ bits, and the fourth indication information indicates a quantity of TBs corresponding to the feedback information in the SCI #1. In this case, a total quantity of information bits of the SCI #1 is $\log_2 M + M*(Np+N+K1+K3)$, and a valid quantity of TBs (that is, the quantity of TBs corresponding to the feedback information in the SCI #1) may be learned of by using the fourth indication information. For meanings of the parameters, refer to descriptions in (a) in FIG. 10. Details are not described herein again.

For example, the solution shown in FIG. 11 is applicable to a scenario in which the second data and the first feedback information are sent to different terminal devices. For example, the first terminal device sends the first feedback information to the second terminal device, and the first terminal device sends the second data to a third terminal device. The second terminal device and the third terminal device are different terminal devices. In this case, when the first terminal device sends the first feedback information to the second terminal device, the destination identifier may be carried. In this way, the second terminal device can learn that the first feedback information is sent to the second terminal device, as shown in (a) in FIG. 11. Optionally, in this case, when the first terminal device sends the first feedback information to the second terminal device, an identifier of the first terminal device may be further carried, for example, a device identifier shown in (b) in FIG. 11 or a source identifier shown in (c) in FIG. 11.

It may be understood that FIG. 7 or FIG. 8 is an example for description, and is not limited. Any variation solution of FIG. 7 or FIG. 8 is applicable to embodiments of this application.

Solution 2: The first feedback information includes a bitmap of Y*N bits, the bitmap of Y*N bits indicates feedback information of Y terminal devices, and feedback information of each terminal device includes a bitmap of N bits, where Y and N are integers greater than 1 or equal to 1. Based on this solution, feedback information corresponding to each terminal device may be indicated by using a bitmap.

For example, if the first terminal device communicates with the Y terminal devices, the first terminal device may negotiate with the Y terminal devices in advance for the bitmap whose size is Y*N bits. A bitmap of every N bits corresponds to one terminal device in the Y terminal devices, that is, the bitmap of every N bits indicates feedback information of the corresponding terminal device. In this way, the first terminal device may directly send the bitmap of Y*N bits to feed back a data receiving status to the Y terminal devices.

The first terminal device and two terminal devices are used as an example. The two terminal devices are respectively referred to as a second terminal device and a fourth terminal device. The first terminal device may negotiate with the second terminal device and the fourth terminal device in advance for a bitmap whose size is 2*N bits. A bitmap of first N bits indicates feedback information for data sent by the second terminal device to the first terminal device, and a bitmap of last N bits indicates feedback information for data sent by the fourth terminal device to the first terminal device. In this way, after receiving the data from the second terminal device and the fourth terminal device, the first terminal device may send the bitmap of 2*N bits, the second terminal device may determine the feedback information for the second terminal device based on the bitmap of first N bits, and the fourth terminal device may determine the feedback information for the fourth terminal device based on the bitmap of last N bits.

For example, in solution 2, identification information may not need to be carried when the terminal device sends the feedback information.

Solution 3: There is a mapping relationship between a resource position of the first feedback information and a resource position of the first data.

Based on this solution, there is a mapping relationship between a resource position of feedback information and a resource position of data. In other words, the feedback information is used to feed back a receiving status of the data at the resource position having the mapping relationship. In this way, a terminal device receiving the feedback information may determine the feedback information based on the mapping relationship. Solution 3 may be considered as a semi-persistent codebook feedback manner.

The resource position of the first feedback information indicates a time domain position and a frequency domain position of the first feedback information, and the resource position of the first data indicates a time domain position and a frequency domain position of the first data.

For example, if there is a mapping relationship between a resource position that is on the PSSCH and that is used to send the first feedback information and $N_{subch}$*Q resource elements, the first feedback information is used to feed back a receiving status of data on the $N_{subch}$*Q resource elements. $N_{subch}$ represents a quantity of frequency domain units (for example, a quantity of subchannels, or a quantity of subbands) included in the resource pool.

For example, the time unit is a slot. It is assumed that a maximum quantity of slots associated with a slot in which the first feedback information is located is Q, and a minimum slot gap between the slot in which the first feedback information is located and the slot associated with the first feedback information is $T_m$. If CBG-based feedback is supported, it is assumed that a maximum quantity of CBGs included in each TB is N. At least one of Q, $T_m$, and N may be preconfigured in the resource pool, or may be determined by the first terminal device, or may be determined by the second terminal device, or may be determined by the first terminal device and the second terminal device through negotiation, or may be configured by the network device, or may be determined by another terminal device. This is not limited. The following describes an association relationship between a resource position of a HARQ codebook and a resource position of data by using an example in which the feedback information is a HARQ feedback and the feedback information is carried in SCI #1.

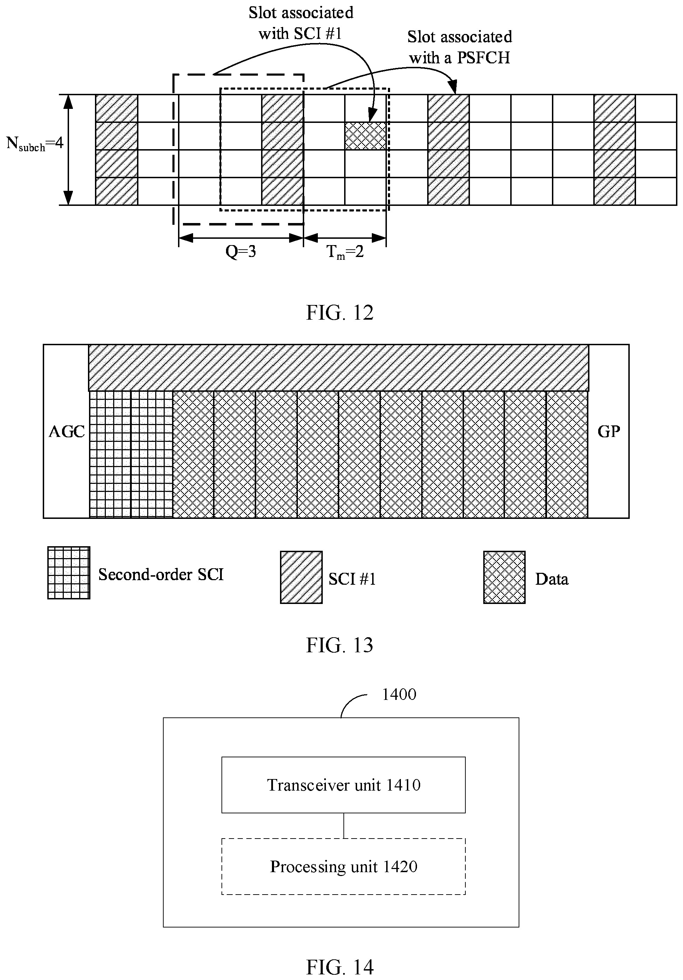

FIG. 12 is a diagram of an association relationship between a resource position of a HARQ codebook and a resource position of data. As shown in FIG. 12, it is assumed that Q=3, $T_m$=2, and $N_{subch}$=4. The first terminal device sends the SCI #1 in the seventh slot, where the SCI #1 carries feedback information, and the SCI #1 may correspond to feedback information (for example, ACK/NACK information) for data on a total of 12 resource elements in a slot 3 to a slot 5.

In a first possible implementation, the SCI #1 is indicated by using a bitmap of $N_{subch}$*Q*N bits, and every N bits correspond to one resource element.

It is assumed that a plurality of terminal devices send data to a same terminal device (for example, the first terminal device) on a resource element in the $N_{subch}$*Q resource elements. In an example, the first terminal device may perform feedback based on a service priority. For example, the first terminal device sends feedback information corresponding to a service with a highest priority or a higher priority. In another example, the first terminal device sends feedback information corresponding to a service whose feedback information is a NACK. For example, if the first terminal device determines that feedback information of a service is a NACK, the first terminal device sends the feedback information (that is, the NACK) of the service.

In addition, the SCI #1 may carry an identifier of the first terminal device, for example, the device identifier of the first terminal device. In this way, a receiver can determine whether the SCI #1 includes feedback information sent to the receiver. Alternatively, the SCI #1 is scrambled by using an identifier of the first terminal device (for example, the device identifier of the first terminal device). In this way, a receiver can also determine whether the SCI #1 includes feedback information sent to the receiver. The SCI #1 may carry the destination identifier, or may not carry the destination identifier. This is not limited.

In a second possible implementation, the SCI #1 indicates the feedback information by using different sequences.

For example, the feedback information has an association relationship with at least one of the following: a base sequence, a cyclic shift (cyclic shift, CS), a PRB position, and the like. For example, the first terminal device may send a ZC (Zadoff-Chu) sequence to indicate an ACK/NACK, where the ACK and the NACK are respectively corresponding to different CSs of a same base sequence. The first terminal device may determine, based on at least one of the following corresponding to each service: a source identifier, a destination identifier, and a device identifier, at least one of the following used for feedback information: a base sequence, a CS, and a PRB position.

For example, it is assumed that the SCI #1 occupies a total of $N_{RB}$ PRBs. The following describes two cases.

Case 1: $N_{RB} \leq N_{subch}*Q$. In this case, each PRB may correspond to one or more resource elements. For example, the $N_{subch}*Q$ resource elements may be numbered in an order of time domain first and then frequency domain, and are respectively corresponding to numbers 1 to $N_{subch}*Q$. Each resource element corresponds to one PRB in the $N_{RB}$ PRBs. An index of a PRB in the $N_{RB}$ PRBs corresponding to a jth subchannel in an ith slot in Q slots is $(i+j*Q)mod(N_{RB})$, where i is an integer and $0 \leq i < Q$, and j is an integer and $0 \leq j < N_{subch}$. For another example, the $N_{subch}*Q$ resource elements may be numbered in an order of frequency domain first and then time domain, and are respectively corresponding to numbers 1 to $N_{subch}*Q$. Each resource element corresponds to one PRB in the $N_{RB}$ PRBs. An index of a PRB in the $N_{RB}$ PRBs corresponding to a jth subchannel in an ith slot in Q slots is $(i* N_{subch}+j)mod(N_{RB})$.

Case 2: $N_{RB} > N_{subch}*Q$. In this case, each resource element corresponds to $\left\lfloor N_{RB}/N_{subch}*Q \right\rfloor$ PRBs. $\lfloor \rfloor$ indicates rounding down. For example, the $N_{subch}*Q$ resource elements may be numbered in an order of time domain first and then frequency domain, and are respectively corresponding to numbers 1 to $N_{subch}*Q$. The $N_{RB}$ PRBs are divided into $N_{subch}*Q$ PRB sets, each PRB set includes $M_{set} = \left\lfloor N_{RB}/N_{subch}*Q \right\rfloor$ PRBs, and each resource element corresponds to one PRB set. An index range of a PRB in a PRB set corresponding to a jth subchannel in an ith slot in Q slots is $[(i+j*Q)*M_{set}, (i+j*Q+1)*M_{set}-1]$, i is an integer and $0 \leq i < Q$, and j is an integer and $0 \leq j < N_{subch}$. For another example, the $N_{subch}*Q$ resource elements may be numbered in an order of frequency domain first and then time domain, and are respectively corresponding to numbers 1 to $N_{subch}*Q$. The $N_{RB}$ PRBs are divided into $N_{subch}*Q$ PRB sets, each PRB set includes $M_{set} = \left\lfloor N_{RB}/N_{subch}*Q \right\rfloor$ PRBs, and each resource element corresponds to one PRB set. An index range of a PRB in a PRB set corresponding to a jth subchannel in an ith slot in Q slots is $[(i*N_{subch}+j)*M_{set}, (i*N_{subch}+j+1)*M_{set}-1]$.

For example, in solution 3, destination information may not need to be carried when the terminal device sends the feedback information.

The foregoing describes specific implementations of the feedback information, and the following describes a solution related to power control of the feedback information.

Optionally, transmit power at which the first terminal device sends the first feedback information in each frequency domain unit is the same as transmit power at which the first terminal device sends the second data in each frequency domain unit, or transmit power at which the first terminal device sends the first feedback information in each frequency domain unit is different from transmit power at which the first terminal device sends the second data in each frequency domain unit.

For example, the first terminal device sends the first feedback information to the second terminal device through the PSSCH, and the first terminal device sends the second data to the third terminal device through the PSSCH. The second terminal device and the third terminal device are different terminal devices. If the first terminal device separately calculates transmit power based on respective channel information, the transmit power may be different. For example, the example shown in FIG. 9 is used as an example. If a distance between the first terminal device and the second terminal device is greater than a distance between the first terminal device and the third terminal device, after power control is performed based on the respective channel information, transmit power at which the first terminal device sends the first feedback information to the second terminal device is higher than transmit power at which the first terminal device sends the second data to the third terminal device.

The channel information represents a parameter that can reflect a channel environment or a channel condition. In an example, the channel information may be, for example, a path loss, reference signal received power (reference signal received power, RSRP), a signal to noise ratio (signal to noise ratio, SNR), or a signal to interference plus noise ratio (signal to interference plus noise ratio, SINR).

In a first possible implementation, the transmit power of the first feedback information in each frequency domain unit is the same as the transmit power of the second data in each frequency domain unit. In other words, the transmit power at which the first terminal device sends the first feedback information in each frequency domain unit is the same as the transmit power at which the first terminal device sends the second data in each frequency domain unit.

For example, the feedback information is carried in the SCI #1. Based on this implementation, transmit power of the SCI #1 in each frequency domain unit is the same as the transmit power of the second data in each frequency domain unit. For example, transmit power of the SCI #1 in each subcarrier is the same as transmit power of the second data in each subcarrier. In an example, this implementation is applicable to a scenario in which the SCI #1 occupies some symbols.

As shown in FIG. 6, in one slot, other than an AGC symbol and a GP symbol, the SCI #1 occupies some symbols. Based on the first possible implementation, the transmit power of the SCI #1 (that is, the feedback information carried in the SCI #1) in each frequency domain unit is the same as the transmit power of the second data in each frequency domain unit. In other words, the SCI #1 and the second data may use same power control. In other words, total transmit power of a symbol on which the SCI #1 is located is the same as total transmit power of the AGC symbol. In this way, AGC accuracy can be improved.

For example, it is assumed that the SCI #1 includes feedback information sent by the first terminal device to Y different terminal devices, transmit power that is in each frequency domain unit and that is determined based on channel information corresponding to the different feedback information is $P_1$, $P_2$, ..., and $P_Y$, and transmit power that is in each frequency domain unit and that is determined based on channel information corresponding to the second data is $P_D$. Y is an integer greater than 1 or equal to 1.

In an example, transmit power of the PSSCH (that is, the transmit power of the SCI #1 in each frequency domain unit and the transmit power of the second data in each frequency domain unit) is determined based on a largest value in $P_1$, $P_2$, ..., $P_Y$, and $P_D$. For example, the transmit power of the PSSCH is the largest value in $P_1$, $P_2$, ..., $P_Y$, and $P_D$. For example, Y=2, the two terminal devices are respectively denoted as a second terminal device and a fourth terminal device, and the second data is sent by the first terminal device to a third terminal device. It is assumed that transmit power that is in each frequency domain unit and that is determined based on channel information between the first terminal device and the second terminal device is $P_1$, transmit power that is in each frequency domain unit and that is determined based on channel information between the first terminal device and the third terminal device is $P_2$, transmit power that is in each frequency domain unit and that is determined based on channel information between the first terminal device and the fourth terminal device is $P_3$, and $P_1 > P_2 > P_3$. In an example, the transmit power of the PSSCH is $P_1$, that is, the transmit power of the SCI #1 in each frequency domain unit and the transmit power of the second data in each frequency domain unit are $P_1$.

In another example, the transmit power of the PSSCH is determined based on transmit power corresponding to a service with a highest priority in all services (that is, a service corresponding to the feedback information and a service corresponding to the second data). For example, the transmit power of the PSSCH is the transmit power corresponding to the service with the highest priority in all the services. For example, Y=2, the two terminal devices are respectively denoted as a second terminal device and a fourth terminal device, and the second data is sent by the first terminal device to a third terminal device. It is assumed that transmit power that is in each frequency domain unit and that is determined based on channel information between the first terminal device and the second terminal device is $P_1$, transmit power that is in each frequency domain unit and that is determined based on channel information between the first terminal device and the third terminal device is $P_2$, transmit power that is in each frequency domain unit and that is determined based on channel information between the first terminal device and the fourth terminal device is $P_3$, and the second data has a highest priority. In an example, the transmit power of the PSSCH is $P_2$, that is, the transmit power of the SCI #1 in each frequency domain unit and the transmit power of the second data in each frequency domain unit are $P_2$.

It may be understood that the foregoing two examples are examples for description, and are not limited. Any solution of determining the transmit power of the PSSCH based on at least one piece of transmit power in $P_1$, $P_2$, ..., $P_Y$, and $P_D$ is applicable to embodiments of this application. For example, the transmit power of the PSSCH is the transmit power corresponding to the service with the higher priority in all the services.

In a second possible implementation, the transmit power of the first feedback information in each frequency domain unit is different from the transmit power of the second data in each frequency domain unit. In other words, the transmit power at which the first terminal device sends the first feedback information in each frequency domain unit is different from the transmit power at which the first terminal device sends the second data in each frequency domain unit.

For example, the feedback information is carried in the SCI #1. Based on this implementation, transmit power of the SCI #1 in each frequency domain unit is different from the transmit power of the second data in each frequency domain unit. In an example, this implementation is applicable to a scenario in which the SCI #1 occupies all symbols.

FIG. 13 is a diagram in which SCI #1 occupies all symbols applicable to an embodiment of this application. As shown in FIG. 13, in one slot, other than an AGC symbol and a GP symbol, the SCI #1 occupies all symbols. The PSSCH includes second-order SCI, the SCI #1 (for example, newly defined SCI), and data. Based on the second possible implementation, the transmit power of the SCI #1 (that is, the feedback information carried in the SCI #1) in each frequency domain unit is different from the transmit power of the second data in each frequency domain unit. In other words, the SCI #1 and the second data may use different power control, and total transmit power of each symbol does not exceed a power level or maximum transmit power of the first terminal device.

For example, it is assumed that the SCI #1 includes feedback information sent by the first terminal device to Y UEs, transmit power that is in each frequency domain unit and that is determined based on channel information corresponding to the different feedback information (that is, feedback information corresponding to different UEs) is $P_1$, $P_2$, ..., and $P_Y$, and transmit power that is in each frequency domain unit and that is determined based on channel information corresponding to the second data is $P_D$. The transmit power of the second data in each frequency domain unit is, for example, $P_D$.

In an example, the transmit power of the SCI #1 is determined based on a largest value in $P_1$, $P_2$, ..., and $P_Y$. For example, the transmit power of the SCI #1 in each frequency domain unit is the largest value in $P_1$, $P_2$, ..., and $P_Y$. For example, Y=2, and the two terminal devices are respectively denoted as a second terminal device and a fourth terminal device. It is assumed that transmit power that is in each frequency domain unit and that is determined based on channel information between the first terminal device and the second terminal device is $P_1$, transmit power that is in each frequency domain unit and that is determined based on channel information between the first terminal device and the fourth terminal device is $P_3$, and $P_1 > P_3$. In an example, the transmit power of the SCI #1 in each frequency domain unit is $P_1$.

In another example, the transmit power of the SCI #1 is determined based on transmit power corresponding to a service with a highest priority in all services (that is, services corresponding to the feedback information of the Y UEs). For example, the transmit power of the SCI #1 in each frequency domain unit is the transmit power corresponding to the service with the highest priority in all the services. For example, Y=2, and the two terminal devices are respectively denoted as a second terminal device and a fourth terminal device. It is assumed that transmit power that is in each frequency domain unit and that is determined based on channel information between the first terminal device and the second terminal device is $P_1$, transmit power that is in each frequency domain unit and that is determined based on channel information between the first terminal device and the fourth terminal device is $P_3$, and a priority of data sent by the second terminal device to the first terminal device is higher than a priority of data sent by the fourth terminal device to the first terminal device. In an example, the transmit power of the SCI #1 in each frequency domain unit is $P_1$.

It may be understood that the foregoing two examples are examples for description, and are not limited. Any solution of determining the transmit power of the SCI #1 in each frequency domain unit based on at least one piece of transmit power in $P_1$, $P_2$, ..., and $P_Y$ is applicable to embodiments of this application. For example, the transmit power of the SCI #1 in each frequency domain unit is the transmit power corresponding to the service with the higher priority in all the services.

It may be understood that in the foregoing two implementations, whether the transmit power of the first feedback information in each frequency domain unit is the same as the transmit power of the second data in each frequency domain unit is used as an example for description. This is not limited. For example, the second data may also be replaced with second-order SCI, or the second data may also be replaced with the second data and second-order SCI.

It may be understood that, in some of the foregoing embodiments, "transmission" is mentioned. Unless otherwise specified, "transmission" includes receiving and/or sending. For example, transmitting a signal may include receiving a signal and/or sending a signal.

It may be further understood that, in some of the foregoing embodiments, for ease of description, the first feedback information and the first PSSCH are used as an example for description. It may be understood that the first feedback information may also be replaced with feedback information, and the first PSSCH may also be replaced with a PSSCH.

It may be further understood that, in some of the foregoing embodiments, "include" and "carried in" are mentioned a plurality of times. It may be understood that they represent a same meaning. For example, that the feedback information is carried in the SCI #1 may be replaced with that the SCI #1 includes the feedback information.

It may be further understood that, in some of the foregoing embodiments, the first data and the first feedback information are mainly used as an example for description. This is not limited. The first feedback information may be replaced with feedback information. In other words, for feedback information for any data, the solution in the foregoing embodiments is also applicable.

It may be further understood that, in embodiments of this application, 1st-order SCI and first-order SCI are sometimes alternately used, and represent a same meaning. For example, the 1st-order SCI and the first-order SCI may represent SCI that is sent on an earlier symbol in a slot and that is carried on a PSCCH. For another example, the 1st-order SCI and the first-order SCI may alternatively represent SCI that is sent on a later symbol in a slot and that may be sent on a PSCCH or may be sent through multiplexing on a PSSCH.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that, in the foregoing method embodiments, the method and the operation implemented by the terminal device may also be implemented by a component (for example, a chip or a circuit) of the terminal device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 14 is a block diagram of a communication apparatus 1400 according to an embodiment of this application. The apparatus 1400 includes a transceiver unit 1410. The transceiver unit 1410 may be configured to implement a corresponding communication function. The transceiver unit 1410 may also be referred to as a communication interface or a communication unit.

Optionally, the apparatus 1400 further includes a processing unit 1420. The processing unit 1420 may be configured to process data.

Optionally, the apparatus 1400 further includes a storage unit. The storage unit may be configured to store instructions and/or data. The processing unit 1420 may read the instructions and/or the data in the storage unit, so that the apparatus implements actions of the terminal device in the foregoing method embodiments.

In a design, the apparatus 1400 may be the first terminal device in the foregoing embodiments, or may be a component (for example, a chip) of the first terminal device. The apparatus 1400 may implement steps or procedures performed by the first terminal device in the foregoing method embodiments. The transceiver unit 1410 may be configured to perform receiving/sending-related operations of the first terminal device in the foregoing method embodiments. The processing unit 1420 may be configured to perform processing-related operations of the first terminal device in the foregoing method embodiments.

In a possible implementation, the transceiver unit 1410 is configured to receive first data; and the transceiver unit 1410 is further configured to send first feedback information through a first physical sidelink shared channel PSSCH, where the first feedback information indicates a receiving status of the first data. The first PSSCH includes first sidelink control information SCI and second SCI, and the second SCI includes the first feedback information; or the first PSSCH includes first SCI and second data, and the first SCI or the second data includes the first feedback information.

The apparatus 1400 may implement the steps or the procedures performed by the first terminal device in the method embodiments according to embodiments of this application. The apparatus 1400 may include units configured to perform the method performed by the first terminal device in the embodiments shown in FIG. 4 to FIG. 13.

In another design, the apparatus 1400 may be the second terminal device in the foregoing embodiments, or may be a component (for example, a chip) of the second terminal device. The apparatus 1400 may implement steps or procedures performed by the second terminal device in the foregoing method embodiments. The transceiver unit 1410 may be configured to perform receiving/sending-related operations of the second terminal device in the foregoing method embodiments. The processing unit 1420 may be configured to perform processing-related operations of the second terminal device in the foregoing method embodiments.

In a possible implementation, the transceiver unit 1410 is configured to send first data; and the transceiver unit 1410 is further configured to receive first feedback information through a first physical sidelink shared channel PSSCH, where the first feedback information indicates a receiving status of the first data. The first PSSCH includes first sidelink control information SCI and second SCI, and the second SCI includes the first feedback information; or the first PSSCH includes first SCI and second data, and the first SCI or the second data includes the first feedback information.

The apparatus 1400 may implement the steps or the procedures performed by the second terminal device in the method embodiments according to embodiments of this application. The apparatus 1400 may include units configured to perform the method performed by the second terminal device in the embodiments shown in FIG. 4 to FIG. 13.

For more detailed descriptions of the apparatus 1400, directly refer to the related descriptions in the foregoing method embodiments. Details are not described herein again.

It should be understood that a specific process in which the units perform the foregoing corresponding steps is described in detail in the foregoing method embodiments. For brevity, details are not described herein.

It should be understood that the apparatus 1400 herein is embodied in a form of a functional unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 1400 may be specifically the terminal device (for example, the first terminal device or the second terminal device) in the foregoing embodiments, and may be configured to perform procedures and/or steps corresponding to the terminal device in the foregoing method embodiments. To avoid repetition, details are not described herein again.

The apparatus 1400 in the foregoing solutions has a function of implementing corresponding steps performed by the terminal device (for example, the first terminal device or the second terminal device) in the foregoing methods. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 1410 may alternatively be a transceiver circuit (for example, the transceiver circuit may include a receiver circuit and a transmitter circuit), and the processing unit may be a processing circuit.

It should be noted that the apparatus in FIG. 14 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

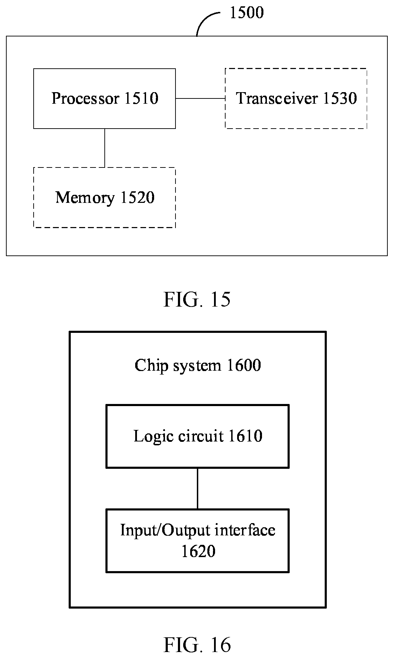

FIG. 15 is a block diagram of a communication apparatus 1500 according to an embodiment of this application. The apparatus 1500 includes a processor 1510, and the processor 1510 is coupled to a memory 1520. Optionally, the apparatus further includes the memory 1520, configured to store a computer program or instructions and/or data. The processor 1510 is configured to execute the computer program or the instructions stored in the memory 1520, or read the data stored in the memory 1520, to perform the methods in the foregoing method embodiments.

Optionally, there are one or more processors 1510.

Optionally, there are one or more memories 1520.

Optionally, the memory 1520 and the processor 1510 are integrated together, or are disposed separately.

Optionally, as shown in FIG. 15, the apparatus 1500 further includes a transceiver 1530. The transceiver 1530 is configured to receive a signal and/or send a signal. For example, the processor 1510 is configured to control the transceiver 1530 to receive a signal and/or send a signal.

In a solution, the apparatus 1500 is configured to implement operations performed by the terminal device in the foregoing method embodiments.

For example, the processor 1510 is configured to execute the computer program or the instructions stored in the memory 1520, to implement related operations of the first terminal device or the second terminal device in the foregoing method embodiments.

In an implementation process, steps of the foregoing method may be completed by using an integrated logic circuit of hardware in the processor 1510 or instructions in a form of software. The method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1520. The processor 1510 reads information in the memory 1520, and completes the steps of the foregoing methods in combination with hardware of the processor. To avoid repetition, details are not described herein again.

It should be understood that, in embodiments of this application, the processor may be one or more integrated circuits, and is configured to execute a related program, to perform the method embodiments of this application.

The processor (for example, the processor 1510) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit or other appropriate hardware or firmware, and/or a combination of hardware and software, and is configured to perform various functions described in this disclosure. The processor may be a general-purpose processor or a dedicated processor. For example, the processor 1510 may be a baseband processor or a central processing unit. The baseband processor may be configured to process a communication protocol and communication data. The central processing unit may be configured to enable the apparatus to execute a software program and process data in the software program. In addition, a part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in a processor and/or a computer, to enable the apparatus to perform various functions and/or processes described in this application.

The memory (for example, the memory 1520) may store data required by the processor (for example, the processor 1510) during software execution. The memory may be implemented by using any suitable storage technology. For example, the memory may be any available storage medium that can be accessed by a processor and/or a computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM) and a direct rambus random access memory (direct rambus RAM, DR RAM), a removable medium, an optical disk memory, a magnetic disk storage medium, a magnetic storage device, a flash memory, a register, a state memory, a remote mount memory, a local or remote memory component, or any other medium capable of carrying or storing software, data, or information and accessible by a processor/computer. It should be noted that the memory described in this specification aims to include but is not limited to these memories and any memory of another appropriate type.

The memory (for example, the memory 1520) and the processor (for example, the processor 1510) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

FIG. 16 is a block diagram of a chip system 1600 according to an embodiment of this application. The chip system 1600 (or may be referred to as a processing system) includes a logic circuit 1610 and an input/output interface (input/output interface) 1620.

The logic circuit 1610 may be a processing circuit in the chip system 1600. The logic circuit 1610 may be coupled to a storage unit, and invoke instructions in the storage unit, so that the chip system 1600 can implement the methods and functions in embodiments of this application. The input/output interface 1620 may be an input/output circuit in the chip system 1600, and outputs information processed by the chip system 1600, or inputs to-be-processed data or signaling information to the chip system 1600 for processing.

In a solution, the chip system 1600 is configured to implement operations performed by the terminal device in the foregoing method embodiments.

For example, the logic circuit 1610 is configured to implement processing-related operations performed by the first terminal device in the foregoing method embodiments, for example, processing-related operations performed by the first terminal device in the embodiments shown in FIG. 4 to FIG. 13. The input/output interface 1620 is configured to implement sending and/or receiving-related operations performed by the first terminal device in the foregoing method embodiments, for example, sending and/or receiving-related operations performed by the first terminal device in the embodiments shown in FIG. 4 to FIG. 13.

For another example, the logic circuit 1610 is configured to implement processing-related operations performed by the second terminal device in the foregoing method embodiments, for example, processing-related operations performed by the second terminal device in the embodiments shown in FIG. 4 to FIG. 13. The input/output interface 1620 is configured to implement sending and/or receiving-related operations performed by the second terminal device in the foregoing method embodiments, for example, sending and/or receiving-related operations performed by the second terminal device in the embodiments shown in FIG. 4 to FIG. 13.

An embodiment of this application further provides a computer-readable storage medium. The computer-readable storage medium stores computer instructions used to implement the method performed by the terminal device (for example, the first terminal device or the second terminal device) in the foregoing method embodiments.

An embodiment of this application further provides a computer program product, including instructions. When the instructions are executed by a computer, the method performed by the terminal device (for example, the first terminal device or the second terminal device) in the foregoing method embodiments is implemented.

An embodiment of this application further provides a communication system. The communication system includes the first terminal device and the second terminal device in the foregoing embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the solutions provided in this application.

In addition, functional units in embodiments of this application may be integrated into one unit, or each unit may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

When software is used to implement the functions, all or some of the functions may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A sidelink communication method, comprising:

    receiving, by a first terminal device, first data; and
    sending, by the first terminal device, first feedback information through a first physical sidelink shared channel PSSCH, wherein the first feedback information indicates a receiving status of the first data, wherein
    the first PSSCH comprises first sidelink control information SCI and second SCI, and the second SCI comprises the first feedback information; or
    the first PSSCH comprises first SCI and second data, and the first SCI or the second data comprises the first feedback information.

2. The method according to claim 1, wherein when the first PSSCH comprises the first SCI and the second SCI, the first PSSCH further comprises the second data.

3. The method according to claim 1 or 2, wherein the second data and the first feedback information are in a same time unit.

4. The method according to any one of claims 1 to 3, wherein the method further comprises:

    receiving, by the first terminal device, first indication information, wherein the first indication information indicates to send the first feedback information through a PSSCH; and
    the sending, by the first terminal device, first feedback information through a first PSSCH comprises:
    sending, by the first terminal device, the first feedback information based on the first indication information through the first PSSCH.

5. The method according to any one of claims 1 to 4, wherein the method further comprises:
    sending, by the first terminal device, second indication information, wherein the second indication information is used to decode the first feedback information.

6. The method according to claim 5, wherein the second indication information comprises at least one of the following information: a format of the first feedback information, a channel coding rate of the first feedback information, a modulation scheme of the first feedback information, a quantity of bits comprised in the first feedback information, and a resource occupied by the first feedback information on the first PSSCH.

7. The method according to any one of claims 1 to 6, wherein the method further comprises:
    sending, by the first terminal device, third indication information, wherein the third indication information indicates that the first PSSCH comprises the first feedback information.

8. The method according to any one of claims 1 to 7, wherein the method further comprises:
    sending, by the first terminal device, at least one of the following: a source identifier of the first feedback information, a destination identifier of the first feedback information, and a device identifier of the first terminal device.

9. The method according to any one of claims 1 to 8, wherein the method further comprises:
sending, by the first terminal device, fourth indication information, wherein the fourth indication information indicates a quantity of transport blocks corresponding to the first feedback information, the first feedback information comprises a HARQ process number and/or a bitmap corresponding to each transport block, and the bitmap indicates feedback information corresponding to the transport block or feedback information corresponding to at least one code block group in the transport block.

10. The method according to claim 9, wherein the quantity of transport blocks corresponding to the first feedback information is K, and a quantity of bits occupied by the fourth indication information is $\log_2 M$, wherein M is a maximum quantity of transport blocks corresponding to feedback information of the first terminal device, K and M are integers greater than 1 or equal to 1, and K is less than M or equal to M.

11. The method according to claim 10, wherein

M and/or a quantity of bits of the bitmap are/is preconfigured in a resource pool; or
M and/or a quantity of bits of the bitmap are/is determined by the first terminal device; or
M and/or a quantity of bits of the bitmap are/is configured by a network device; or
M and/or a quantity of bits of the bitmap are/is determined by another terminal device.

12. The method according to any one of claims 1 to 8, wherein
there is a mapping relationship between a resource position of the first feedback information and a resource position of the first data.

13. The method according to any one of claims 1 to 8, wherein
the first feedback information comprises a bitmap of Y*N bits, the bitmap of Y*N bits indicates feedback information of Y terminal devices, and feedback information of each terminal device comprises a bitmap of N bits, wherein Y and N are integers greater than 1 or equal to 1.

14. The method according to any one of claims 1 to 13, wherein
transmit power at which the first terminal device sends the second data in each frequency domain unit is the same as or different from transmit power at which the first terminal device sends the first feedback information in each frequency domain unit.

15. The method according to claim 14, wherein both the transmit power of the second data in each frequency domain unit and the transmit power of the first feedback information in each frequency domain unit are first transmit power, and the first transmit power is any one of the following:

highest transmit power in transmit power that is in each frequency domain unit and that is determined based on channel information corresponding to the first feedback information and transmit power that is in each frequency domain unit and that is determined based on channel information corresponding to the second data; or
transmit power that is in each frequency domain unit and that is determined based on channel information corresponding to data with a highest priority in the first data and the second data.

16. The method according to claim 14, wherein the transmit power of the second data in each frequency domain unit is different from the transmit power of the first feedback information in each frequency domain unit, and the transmit power of the first feedback information in each frequency domain unit is any one of the following:

highest transmit power in transmit power that is in all frequency domain units and that is determined based on channel information corresponding to the first feedback information; or
transmit power that is in each frequency domain unit and that is determined based on channel information corresponding to data with a highest priority in the first data.

17. A sidelink communication method, comprising:

sending, by a second terminal device, first data; and
receiving, by the second terminal device, first feedback information through a first physical sidelink shared channel PSSCH, wherein the first feedback information indicates a receiving status of the first data, wherein the first PSSCH comprises first sidelink control information SCI and second SCI, and the second SCI comprises the first feedback information; or
the first PSSCH comprises first SCI and second data, and the first SCI or the second data comprises the first feedback information.

18. The method according to claim 17, wherein when the first PSSCH comprises the first SCI and the second SCI, the first PSSCH further comprises the second data.

19. The method according to claim 17 or 18, wherein the second data and the first feedback information are in a same time unit.

20. The method according to any one of claims 17 to 19, wherein the method further comprises:

   sending, by the second terminal device, first indication information, wherein the first indication information indicates to send the first feedback information through a PSSCH; and
   the receiving, by the second terminal device, first feedback information through a first PSSCH comprises:
   receiving, by the second terminal device, the first feedback information based on the first indication information through the first PSSCH.

21. The method according to any one of claims 17 to 20, wherein the method further comprises:

   receiving, by the second terminal device, second indication information, wherein the second indication information is used to decode the first feedback information; and
   decoding, by the second terminal device, the first feedback information based on the second indication information.

22. The method according to claim 21, wherein the second indication information comprises at least one of the following information: a format of the first feedback information, a channel coding rate of the first feedback information, a modulation scheme of the first feedback information, a quantity of bits comprised in the first feedback information, and a resource occupied by the first feedback information on the first PSSCH.

23. The method according to any one of claims 17 to 22, wherein the method further comprises:
   receiving, by the second terminal device, third indication information, wherein the third indication information indicates that the first PSSCH comprises the first feedback information.

24. The method according to any one of claims 17 to 23, wherein the method further comprises:
   receiving, by the second terminal device, at least one of the following: a source identifier of the first feedback information, a destination identifier of the first feedback information, and a device identifier of a first terminal device.

25. The method according to any one of claims 17 to 24, wherein the method further comprises:
   receiving, by the second terminal device, fourth indication information, wherein the fourth indication information indicates a quantity of transport blocks corresponding to the first feedback information, the first feedback information comprises a HARQ process number and/or a bitmap corresponding to each transport block, and the bitmap indicates feedback information corresponding to the transport block or feedback information corresponding to at least one code block group in the transport block.

26. The method according to claim 25, wherein the quantity of transport blocks corresponding to the first feedback information is K, and a quantity of bits occupied by the fourth indication information is $\log_2 M$, wherein M is a maximum quantity of transport blocks corresponding to feedback information of the first terminal device, K and M are integers greater than 1 or equal to 1, and K is less than M or equal to M.

27. The method according to claim 26, wherein

   M and/or a quantity of bits of the bitmap are/is preconfigured in a resource pool; or
   M and/or a quantity of bits of the bitmap are/is determined by the second terminal device; or
   M and/or a quantity of bits of the bitmap are/is configured by a network device; or
   M and/or a quantity of bits of the bitmap are/is determined by another terminal device.

**28.** The method according to any one of claims 17 to 24, wherein
there is a mapping relationship between a resource position of the first feedback information and a resource position of the first data.

**29.** The method according to any one of claims 17 to 24, wherein
the first feedback information comprises a bitmap of Y*N bits, the bitmap of Y*N bits indicates feedback information of Y terminal devices, and feedback information of each terminal device comprises a bitmap of N bits, wherein Y and N are integers greater than 1 or equal to 1.

**30.** A communication apparatus, comprising a module or a unit configured to perform the method according to any one of claims 1 to 29.

**31.** A communication apparatus, comprising a processor, wherein the processor is configured to execute a computer program or instructions stored in a memory, to enable the apparatus to perform the method according to any one of claims 1 to 29.

**32.** The apparatus according to claim 31, wherein the apparatus further comprises the memory and/or a communication interface, and the communication interface is coupled to the processor; and
the communication interface is configured to input and/or output information.

**33.** The apparatus according to any one of claims 30 to 32, wherein the apparatus is any one of the following: a chip, a chip system, or a circuit.

**34.** A computer-readable storage medium, wherein the computer-readable storage medium stores a computer program or instructions, and when the computer program or the instructions are run on a communication apparatus, the communication apparatus is enabled to perform the method according to any one of claims 1 to 29.

**35.** A computer program product, wherein the computer program product comprises a computer program or instructions for performing the method according to any one of claims 1 to 29.

**36.** A communication system, comprising a first terminal device and a second terminal device, wherein
the first terminal device is configured to perform the method according to any one of claims 1 to 16, and the second terminal device is configured to perform the method according to any one of claims 17 to 29.

FIG. 1

A PSFCH minimum time gap is 2

A PSFCH resource
period is 4

AGC | PSCCH | Second-order SCI | Data | GP | AGC | PSFCH | GP

AGC | PSCCH | Second-order SCI | Data | GP

▦ Second-order SCI     ▨ Data

FIG. 2

EP 4 576 634 A1

In this slot, UE 2
sends data #1 to
UE 1

In this slot, the UE
1 sends data #2 to
UE 3

On a PSFCH resource in this slot, the
UE 1 sends a HARQ feedback of the
data #1 to the UE 2, and the UE 1
receives a HARQ feedback of the data
#2 from the UE 3

FIG. 3

400

A first terminal device receives first data

410

The first terminal device sends first feedback information
through a first PSSCH, where the first feedback information
indicates a receiving status of the first data

420

FIG. 4

In this time unit, a
second terminal device
sends first data to a first
terminal device

In this time unit, the first terminal
device sends first feedback
information to the second terminal
device, and the first terminal device
sends second data

FIG. 5

First SCI    Second SCI    Data

FIG. 6

Second terminal device →(circle)

First data →

← First feedback information and second data

(circle)← First terminal device

FIG. 7

| Destination identifier | First feedback information |
|---|---|

(a)

| Device identifier | Destination identifier | First feedback information |
|---|---|---|

(b)

| Source identifier | Destination identifier | First feedback information |
|---|---|---|

(c)

FIG. 8

FIG. 9

| HARQ process number (4 bits) | ACK/NACK bitmap (N bits) | HARQ process number (4 bits) | ACK/NACK bitmap (N bits) | … | HARQ process number (4 bits) | ACK/NACK bitmap (N bits) |
|---|---|---|---|---|---|---|

TB 1      TB 2      TB K

(a)

| Indication information #4 ($\log_2 M$ bits) | HARQ process number (4 bits) | ACK/NACK bitmap (N bits) | HARQ process number (4 bits) | ACK/NACK bitmap (N bits) | … | HARQ process number (4 bits) | ACK/NACK bitmap (N bits) |
|---|---|---|---|---|---|---|---|

TB 1      TB 2      TB M

(b)

FIG. 10

| Destination identifier (K1 bits) | HARQ process number (4 bits) | ACK/NACK bitmap (N bits) | ... | Destination identifier (K1 bits) | HARQ process number (4 bits) | ACK/NACK bitmap (N bits) |
|---|---|---|---|---|---|---|

TB 1                                              TB K

(a)

| Device identifier (K2 bits) | Destination identifier (K1 bits) | HARQ process number (4 bits) | ACK/NACK bitmap (N bits) | ... | Destination identifier (K1 bits) | HARQ process number (4 bits) | ACK/NACK bitmap (N bits) |
|---|---|---|---|---|---|---|---|

TB 1                                              TB K

(b)

| Source identifier (K3 bits) | Destination identifier (K1 bits) | HARQ process number (4 bits) | ACK/NACK bitmap (N bits) | ... | Source identifier (K3 bits) | Destination identifier (K1 bits) | HARQ process number (4 bits) | ACK/NACK bitmap (N bits) |
|---|---|---|---|---|---|---|---|---|

TB 1                                              TB K

(c)

FIG. 11

EP 4 576 634 A1

Slot associated
with SCI #1

Slot associated
with a PSFCH

$N_{subch}=4$

Q=3

$T_m=2$

FIG. 12

AGC

GP

Second-order SCI

SCI #1

Data

FIG. 13

1400

Transceiver unit 1410

Processing unit 1420

FIG. 14

1500

Processor 1510 —— Transceiver 1530

Memory 1520

FIG. 15

Chip system 1600

Logic circuit 1610

Input/Output interface 1620

FIG. 16

## INTERNATIONAL SEARCH REPORT

| International application No. |
| --- |
| **PCT/CN2023/118529** |

| | |
| --- | --- |
| **A.** | **CLASSIFICATION OF SUBJECT MATTER** |

H04L 5/00(2006.01)i

According to International Patent Classification (IPC) or to both national classification and IPC

| | |
| --- | --- |
| **B.** | **FIELDS SEARCHED** |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXTC, DWPI, VEN, 3GPP: 侧行, 旁路, 侧链, 直链, 链路, 物理侧行共享信道, 反馈, 侧行控制信息, SCI, PSSCH, sidelink, HARQ, ACK, NACK, feedback, PSFCH

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 110380828 A (VIVO COMMUNICATION TECHNOLOGY CO., LTD.) 25 October 2019 (2019-10-25) <br> description, paragraphs 76-84 and 104-106 | 1-36 |
| X | CN 114553384 A (VIVO COMMUNICATION TECHNOLOGY CO., LTD.) 27 May 2022 (2022-05-27) <br> description, paragraphs 150-178 | 1-36 |
| X | US 2021029675 A1 (VIVO MOBILE COMMUNICATION CO., LTD.) 28 January 2021 (2021-01-28) <br> description, paragraphs 31, 46, and 96 | 1-36 |
| A | CMCC. "Discussion on HARQ feedback for NR V2X" <br> *3GPP TSG RAN WG1 #98 bis, R1-1910164*, 20 October 2019 (2019-10-20), <br> entire document | 1-36 |

☐ Further documents are listed in the continuation of Box C.　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 November 2023** | **17 November 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/118529**

| Patent document cited in search report | | | Publication date (day/month/year) | Patent family member(s) | | | Publication date (day/month/year) |
|---|---|---|---|---|---|---|---|
| CN | 110380828 | A | 25 October 2019 | JP | 2021519029 | A | 05 August 2021 |
| | | | | EP | 3780446 | A1 | 17 February 2021 |
| | | | | US | 2023040458 | A1 | 09 February 2023 |
| | | | | KR | 20210003153 | A | 11 January 2021 |
| | | | | WO | 2019196829 | A1 | 17 October 2019 |
| | | | | US | 2021037534 | A1 | 04 February 2021 |
| | | | | IN | 202027049216 | A | 12 February 2021 |
| CN | 114553384 | A | 27 May 2022 | None | | | |
| US | 2021029675 | A1 | 28 January 2021 | KR | 20200142556 | A | 22 December 2020 |
| | | | | WO | 2019196690 | A1 | 17 October 2019 |
| | | | | JP | 2021518723 | A | 02 August 2021 |
| | | | | EP | 3780844 | A1 | 17 February 2021 |
| | | | | US | 2023018092 | A1 | 19 January 2023 |
| | | | | CN | 110381599 | A | 25 October 2019 |
| | | | | IN | 202027048984 | A | 12 February 2021 |

Form PCT/ISA/210 (patent family annex) (July 2022)

**REFERENCES CITED IN THE DESCRIPTION**

**Patent documents cited in the description**

- CN 202211165768
- CN 202211399112X